(19) Europäisches Patentamt
European Patent Office
Office européen des brevets

(11) **EP 3 718 743 B1**

(12) **EUROPEAN PATENT SPECIFICATION**

(45) Date of publication and mention
of the grant of the patent:
**02.06.2021 Bulletin 2021/22**

(51) Int Cl.:
***B29C 64/106*** (2017.01)  ***B33Y 70/00*** (2020.01)
***C08L 67/04*** (2006.01)

(21) Application number: **19397509.1**

(22) Date of filing: **01.04.2019**

(54) **A METHOD FOR MANUFACTURING COMPOSITE MATERIAL HAVING SELF-SUPPORTING CAPABILITY IN A MELT STATE THAT IS SUITABLE FOR FUSED GRANULATE FABRICATION AND A PRODUCT THEREOF**

VERFAHREN ZUR HERSTELLUNG VON VERBUNDMATERIAL MIT SELBSTTRAGENDER FÄHIGKEIT IN EINEM SCHMELZZUSTAND, DER ZUR HERSTELLUNG VON VERSCHMOLZENEM GRANULAT GEEIGNET IST, UND PRODUKT DAVON

PROCÉDÉ DE FABRICATION DE MATÉRIAU COMPOSITE AYANT UNE CAPACITÉ AUTOPORTANTE DANS UN ÉTAT FONDU ET ADAPTÉ À LA FABRICATION DE GRANULÉS FUSIONNÉS ET PRODUIT CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.10.2020 Bulletin 2020/41**

(73) Proprietor: **UPM-Kymmene Corporation**
**00100 Helsinki (FI)**

(72) Inventor: **Saarikoski, Eve**
**00400 Helsinki (FI)**

(74) Representative: **Berggren Oy**
**P.O. Box 16**
**Eteläinen Rautatiekatu 10A**
**00101 Helsinki (FI)**

(56) References cited:
**EP-A1- 3 257 661    JP-A- 2019 026 702**

## Description

Technical field

The invention relates to a composite material suitable for fused granulate fabrication which comprises polylactic acid, pulp that contains wood-based cellulose fibres wood-based cellulose fibres, polypropylene and melt strength enhancing agent. The invention further relates to a method for manufacturing such composite material and to use of such melt strength enhancing agent in a composite material.

Background

Additive manufacturing as a technology refers to forming a solid object based on a model, as defined in standards ISO 17296-1 and ASTM 2792-12. Additive manufacturing is also known as augmented manufacturing, three dimensional printing, or 3D printing. Additive manufacturing by extrusion denotes a method comprising deposition of flowing thermoplastic material through a nozzle on a platform in a predefined manner to obtain a product according to a model. Such a three-dimensional product is also referred to as a '3D printed' product. Additive manufacturing by extrusion differs from conventional extrusion and moulding methods, wherein a single shot of material is processed continuously into a specific shape. Typically, a mould or counter-pressure may be used to support the melt or semi-solid material, before it solidifies. Additive manufacturing by extrusion is performed without a mould. Hence, thermoplastic material used in additive manufacturing may require different characteristics than those used in conventional extrusion or moulding methods. Material may be supplied to the additive manufacturing system in different forms, such as in a filament, powder, or granulate form. Filament material pulled from a holder, also denoted as a spool, is one way of providing material for an additive manufacturing system working on an extrusion principle. Filament based methods are, however, intended for production of smaller scale objects. Granulate material on the other hand, is a more convenient way of providing material for an additive manufacturing system when larger melt portions and a larger extruder nozzle size are used. This enables a faster production of larger objects.

Fused granulate fabrication FGF is an additive manufacturing method, wherein composite material in the form of granulates is supplied to a vertical extrusion screw that is arranged to rotate, heat and press the granulates such that the temperature of the granulates rises above the melting point of the composite material and a homogeneous molten mass is obtained, denoted as composite melt. The composite melt is then pressed through a nozzle, which is configured to control the flow of the composite melt. The flow of the composite melt may be controlled, for example, by selecting the diameter and/or shape of the nozzle, which may be adjustable or replaceable. Typical nozzle diameter used in fused granulate fabrication is in the range of 3 to 10 millimetres. A larger diameter and/or shape increases the throughput of composite melt, while a smaller diameter and/or shape decreases it, respectively. By changing the nozzle dimensions, the output rate of the composite melt may thus be adjusted. This, in turn enables to control the magnitude of the additive manufacturing method. Fused granulate fabrication may be used to produce large objects which have been formed of a single part, based on a digital model. The produced object may have a complex structure, such as a curved wall with integrated electricity insets, or a prototype mould cavity for casting. Fused granulate fabrication further may be used to produce objects that are intended to hold weight or endure, such as construction elements, indoor or outdoor furniture or sport equipment, such as Kayaks. When considering fused granulate fabrication to other additive manufacturing methods, such as filament based methods, it contains several advantages. The larger nozzle dimensions enable a much faster output of material. This enables larger constructions to be printed more efficiently. The faster output provides saving potential for production time. Fused granulate fabrication further enables to lower the material costs, when compared to filament based printing.

Polylactic acid, hereafter abbreviated as PLA, is a widely used thermoplastic matrix material in additive manufacturing by extrusion and may also be used in fused granulate fabrication. PLA has high stiffness in temperatures below the glass transition temperature. PLA typically has good adhesion to a heated platform, such as glass bed, which is often used in an extrusion-type additive manufacturing system to receive the melt. A challenge of PLA in additive manufacturing is, however, that while the processing temperature $T_{sub}$ of PLA may be in the range of 180 to 195°C or even higher, the heat deflection temperature and the glass transition temperature of the polymer are much lower. When heated to a temperature higher than the glass transition temperature or melt temperature of the material, a thermoplastic material undergoes a transition from rigid state into a softer melt state. A high difference between the processing temperature $T_{sub}$ and the glass transition temperature leads to slow cooling of melt formed of PLA. While semi-crystalline grades have a faster crystallization speed than amorphous grades of PLA, it is problematic that the PLA material when in melt state does not hold the extruded shape sufficiently. Semi-crystalline polymer chains also cause the polymer material to shrink during cooling. Without a supporting mould, the shrinkage may lead to a 3D printed product not having sufficient dimensional precision or strength for the end application purpose. In addition, PLA has a relatively low melt viscosity, which may be difficult to operate and can lead to messy print result in a situation where the printed material in the melt state does not stay in the extruded shape, but continues to flow and may collapse.

A composite melt in general has an 'open time', when it is heated above the melting point or glass transition temperature and is capable of flowing and can therefore be deposited on a substrate. The definition of a 'self-supporting', on the other hand, denotes a cohesive strength of the composite melt, i.e. properties of the composite melt that enable the melt at a certain point to support its own weight. The point when self-supporting capability of the composite melt is reached can be determined by viscoelastic measurements from the material. The long open time of PLA is a particular challenge with fused granulate fabrication, when the larger composite melt volumes are used to produce larger objects. In addition of the volume being large, the printing speed is also high. Despite of larger magnitude compared to filament-based methods, the resulting product should have a precise shape. Fused granulate fabrication, like other the additive manufacturing methods, should still be capable of leaving empty space or gaps between deposited material portions or layers. When large portions of the composite melt are printed adjacently to each other, the composite melt should be capable of both adhering to already printed layers and maintaining its shape, while solidifying.

Publication EP 3 257 661 A1 discloses a filament formed of material comprising semi-crystalline polylactic acid and chemical pulp of wood-based cellulose fibres, wherein the chemical pulp is used to reinforce the composite melt comprising PLA and to provide cohesive strength for self-supporting behaviour. When using a filament for additive manufacturing, a moderate material stiffness is preferable, since the filament should be flexible and withstand tension. This differs from fused granulate based fabrication, where large amounts of granulates are fed to the system and higher flow rates are typically used. When the flow of composite melt at the nozzle increases, the deposited mass of the composite melt increases accordingly. The increase of deposited mass is a factor which is especially problematic with fused granulate fabrication, wherein larger nozzle dimension are used, in comparison to filament-based extrusion methods. The chemical pulp in the composition is also abrasive, due to high surface area and stiffness of the highly processed cellulose fibres in the chemical pulp. While the amount of cellulose fibers may be increased, it does not as such solve the problem of higher melt volumes. While the chemical pulp may provide cohesive strength for a composite melt containing semi-crystalline polylactic acid, the chemical pulp has also been observed to reduce the melt flow of the composite melt at the extrusion nozzle, which may become problematic for the dispensing accuracy of a self-supporting composite melt. Thus, a sole increase in the amount of chemical pulp in a composite material comprising semi-crystalline polylactic acid may therefore have a negative effect to the processability of the composite material, in particular when using higher volumes. Therefore, when scaling up the printing speed and volume of additive manufacturing, chemical pulp, alone, may no longer be a sufficient means to provide cohesive strength and processability for the composite material in a melt state.

A granulate-based extrusion method therefore poses new challenges to the use of a composite material containing PLA and chemical pulp in additive manufacturing, which need to be addressed.

Summary

The challenges of fused granulate fabrication when using material comprising semi-crystalline polylactic acid, as referred to above, may be addressed by providing a composition that in addition contains of polyolefin to provide stiffness and melt strength enhancing agent which improves the processability of the material at melt state. Advantageously, the composition may further contain polybutyrate adipate terephthalate. The polyolefin, melt strength enhancing agent and the polybutyrate adipate terephthalate, each independently may be used to adjust the rheological properties of the composition at melt state. The use of these compounds further enables to use pulp that contains wood-based cellulose fibres in the composition, while still preserving or even improving the self-supporting capability of the composition at melt state. In addition, a solid object formed of the composite material by fused granulate fabrication still possesses mechanical properties that are sufficient for the intended purposes.

When using a melt strength enhancing agent and/or polybutyrate adipate terephthalate, the amount of pulp that contains wood-based cellulose fibres in the composition may be in an amount equal to or higher than 10 wt.%, preferably in an amount of equal to or higher than 20 wt.%, such as in the range of 10 to 40 wt.% of the composite. While pulp that contains wood-based cellulose fibres may be used to provide cohesive strength at melt state to a composite material highly processed cellulose fibres, wherein the amount of lignin has been reduced have excellent physical properties, such as stiffness and rigidity. The chemical pulp, while restrictive to the melt flowability and has abrasive characteristics, thereby serves well to reinforce the composite material and also provides part of the cohesive strength at melt state. The mechanical strength of an article formed of a composite material that contains pulp that contains wood-based cellulose fibres can be determined, for example, by means of tensile strength and modulus measurements (ISO standard 527/50, 23°C).

The polyolefin, the melt strength enhancing agent and the polybutyrate adipate terephthalate may be used either separately or together to adjust the viscoelastic properties of the composite material. By selecting a suitable composition, the composite material may be configured to have sufficient cohesive strength at melt state upon fused granulate fabrication, such that the composite melt has self-supporting capability when extruded. The presence and amount of the melt strength enhancing agent and/or the polybutyrate adipate terephthalate in the composite material may further be used to control the processing temperature range of the composite material. The cohesive strength for fused granulate fabrication may be determined by a rheological means. This can be determined with an amplitude sweep measurement, which measures a shear loss modulus G" and a shear storage modulus G' level as a function of shear strain $\gamma$ applied to the composite material at a melt state, for example at 180°C or at 190°C. The self-supporting capability of the composition may thus be expressed as the amount of shear strain $\gamma$, which is needed to lose the elastic response of the composite material at melt state. The amplitude sweep is typically performed to the material at rest up to 1000% of shear strain $\gamma$, i.e. in the range of 0 to 1000%. When the composite material at melt state, during the amplitude sweep measurement, has a shear loss modulus G" which is less than a shear storage modulus G', the composite material has self-supporting capability. Thus, a shear strain $\gamma$ range may be identified, wherein the composition displays elastic response to the applied amount of shear strain $\gamma$. In addition to the amplitude sweep, the viscoelastic range of the composite material, wherein the loss modulus G" of the composite material is less than the shear storage modulus G' of the composite material, may be determined using a temperature sweep. The temperature sweep may thus be used to identify a temperature which denotes the maximum temperature wherein the composite melt at linear viscoelastic region displays self-supporting capability. The temperature sweep is typically performed to the composite material in a temperature range of 50°C to 180°C, at a linear rate of 5°C/min. The temperature sweep and amplitude sweep measurements can be done with parallel plates geometry having a disc diameter of 25 mm and a gap of 0.6 mm, in accordance with ISO standard 6721-10:2015.

Polypropylene is a polyolefin, which has a low surface free energy level and is highly resistant to many chemical solvents, bases and acids. Due to the nonpolar and low surface free energy characteristics, polypropylene is highly hydrophobic, which may cause a polymer melt made of polypropylene difficult to adhere to a platform. Furthermore, elastomer modified polypropylene has traditionally been difficult to use in additive manufacturing by extrusion, since the polymer material tends to shrink during cooling. To improve the miscibility of polypropylene to pulp that contains wood-based cellulose fibres, polypropylene may however be grafted to contain coupling agents, such as maleic acid anhydride, which promotes the covalent coupling of the polymer strands with the cellulose fibres in the pulp. The heat deflection temperature $T_{hd}$ of polypropylene is relatively high, typically equal to or above 80°C, when determined under constant flexural stress of 0.45 Mpa, in accordance with method B of the standard ISO 75-2 (version 2013), which makes polypropylene thermally more resistant material than semi-crystalline polylactic acid. Therefore, polypropylene, in particular polypropylene homopolymer and/or polypropylene which has been grafted to contain coupling agent, may be used to adjust the viscoelastic properties of a composition that contains pulp that contains wood-based cellulose fibres and semi-crystalline polylactic acid. Advantageously, the composite material comprises polypropylene in an amount equal to or higher than 2 wt.%, preferably equal to or higher than 5 wt.%, most preferably equal to or higher than 10 wt.% of the composite material, such as in the range of 2 to 25 wt.%, preferably in the range of 5 to 20 wt.%. Advantageously, the composite material comprises polypropylene which has high stiffness. A high stiffness polypropylene refers to material which has flexural modulus that is equal to or higher than 1000 MPa, preferably equal to or higher than 1300 MPa, when determined according to standard ISO 187.

The melt strength enhancing agent may comprise or consist of a copolymer based on vinyl acetate and vinyl versatate. Advantageously, the melt strength enhancing agent comprises or consists of a terpolymer based on vinyl acetate, vinyl versatate and ethylene. Vinyl acetate is the vinyl ester of acetic acid, whereas vinyl versatate is the vinyl ester of versatic acid, which is a carboxylic acid that contains ten carbon atoms. Vinyl versatate has a highly branched structure. A mixture containing both vinyl acetate and vinyl versatate has a higher hydrolysis resistance and increased hydrophobicity than vinyl acetate alone. The relative amounts of vinyl acetate, vinyl versatate and ethylene have an effect to the properties of the melt strength enhancing agent. A particularly preferable melt strength enhancing agent is a copolymer and/or a terpolymer having a glass transition temperature $MEA_{Tg}$ which is less than 0°C, such as in the range of -5 to -20°C, preferably in the range of -7 to -17°C, most preferably in the range of -10 to -16°C. Such a melt strength enhancing agent has been observed to improve the melt strength processability of a composition that contains pulp that contains wood-based cellulose fibres and semi-crystalline polylactic acid. Further, such melt strength enhancing agent has been found to be compatible with polypropylene. Advantageously, the composite material comprises the melt strength enhancing agent in an amount equal to or higher than 10 wt.%, preferably equal to or higher than 15 wt.%, most preferably equal to or higher than 20 wt.% of the composite material, such as in the range of 1 to 25 wt.%, preferably in the range of 10 to 22 wt.%, most preferably in the range of 15 to 20 wt.%. The presence of the melt enhancing agent in the composite material may be determined by analytical means, such as by mass spectrometry analysis and/or differential scanning calorimetry.

The composite material may further be configured to contain polybutyrate adipate terephthalate, which is a biodegradable random copolymer. Polybutyrate adipate terephthalate, also known as polybutyrate, is a copolyester of adipic acid, 1,4-butanediol and dimethyl terephthalate. Due to the absence of structural order, however, polybutyrate does not crystallize to a significant degree, and therefore may be used to reduce the shrinking of the semi-crystalline polylactic acid and polypropylene. Polybutyrate also has low shear storage modulus and low shear loss modulus, which can be used to adjust the rheological properties of a composite at a melt state. The low stiffness and a broad temperature range wherein the melting may occur may further be used for obtaining better flexibility and toughness for the composition. While the terephthalate portions of polybutyrate provide stability, the copolymer has been observed to decrease mechanical properties of composite material that contains pulp that contains wood-based cellulose fibres, semi-crystalline polylactic acid and polypropylene. Preferably, the composite material composition contains polybutyrate in an amount of equal to or less than 12 wt.%, more preferably in an amount of equal to or less than 10 wt.%, most preferably in an amount of equal to or less than 5 wt.% of the composite material, such as in the range of 1 to 12 wt.%, preferably in the range of 2 to 10 wt.%, most preferably in the range of 2 to 5 wt.% of the composite material. The presence of polybutyrate adipate terephthalate in the composite material may be determined by analytical means, such as by mass spectrometry analysis.

Rheological studies with compositions containing semi-crystalline polylactic acid in an amount equal to or higher than 25 wt.% of the composite material, pulp that contains wood-based cellulose fibres in an amount equal to or higher than 10 wt.% of the composite material and polypropylene in an amount equal to or higher than 2 wt.% of the composite material have indicated that such compositions do not have a suitable elastic response upon fused granulate fabrication This was indicated by the shear loss modulus G" which stayed larger than the shear storage modulus G' in an amplitude sweep measurement over the whole shear strain range. The rheological studies have also indicated that a melt strength enhancing agent comprising a copolymer based on vinyl acetate and vinyl versatate, or a terpolymer based on vinyl acetate, vinyl versatate and ethylene, provides dimensional stability to the same composition, particularly upon fused granulate fabrication, when solidifying the composite melt. The results further indicate that in fused granulate fabrication, the large volumes and high shear forces within the vertical extrusion screw benefit of the melt strength enhancing agent, which improves the composite melt processability. When extruding a composite melt at the nozzle at the processing temperature $T_{sub}$ in the range of 180 to 200°C, a composite melt comprising such melt strength enhancing agent demonstrates improved self-supporting capability. Of particular notice was, that when the composite material further comprised polybutyrate adipate terephthalate, the composition in a melt state at 180°C presented self-supporting capability also at higher shear strain, as evidenced by rheological studies. This was observed also at a higher processing temperature of 190°C, wherein even higher cohesive strength was observed. The unexpected effect of increased melt processability, when both polybutyrate adipate terephthalate and a melt strength enhancing agent comprising a copolymer based on vinyl acetate and vinyl versatate, or a terpolymer based on vinyl acetate, vinyl versatate and ethylene was used, is most likely due to interaction of the two compounds. Therefore melt strength enhancing agent and polybutyrate adipate terephthalate may be configured to enhance the melt state processability of a composition containing semi-crystalline polylactic acid, pulp that contains wood-based cellulose fibres and polypropylene, which enables fused granulate fabrication to be performed over a broader temperature range. The composition further enables a higher composite melt output rate from the extruder nozzle, while maintaining the self-supporting capability of the composite melt at a higher processing temperature $T_{sub}$.

Thus the use of a melt strength enhancing agent which comprises or consists of copolymer based on vinyl acetate and vinyl versatate or terpolymer further based on ethylene, may be used to enhance the melt strength properties of the composite material. In particular, a combination comprising both polybutyrate adipate terephthalate and said copolymer or said terpolymer may be used to provide a composite material which has a high self-supporting capability at melt state in elevated temperatures and high printing speeds, as demonstrated by viscoelastic properties of the material in a melt state, when shear strain is applied. This further enables high quality printing of very large objects from composite melt without a mould by means of fused granulate fabrication.

Accordingly, there is provided a composite material having a self-supporting capability at a melt state that is suitable for fused granulate fabrication, the composite material having a composition that comprises

- semi-crystalline polylactic acid in an amount equal to or higher than 25 wt.% of the composite material,
- pulp that contains wood-based cellulose fibres in an amount equal to or higher than 10 wt.% of the composite material,
- polypropylene in an amount equal to or higher than 2 wt.% of the composite material and
  melt strength enhancing agent that comprises copolymer based on vinyl acetate and vinyl versatate.

According to another aspect, there is provided a method for manufacturing composite material having a self-supporting capability at a melt state that is suitable fused granulate fabrication, the method comprising

- mixing

    - pulp that contains wood-based cellulose fibres,
    - semi-crystalline polylactic acid,
    - polypropylene and
    - melt strength enhancing agent that comprises copolymer based on vinyl acetate and vinyl versatate

such that a composition is formed,

- heating the composition to a temperature $T_{sub}$ above the melting point of the composition, thereby producing composite material at a melt state,
- decreasing the temperature of the composite material at the melt state below the melting point of the composition, thereby solidifying the composite material,
  wherein

  ▪ the amount of semi-crystalline polylactic acid is equal to or higher than 25 wt.% of the composite material,
  ▪ the amount of pulp that contains wood-based cellulose fibres is equal to or higher than 10 wt.% of the composite material, and
  ▪ the amount of polypropylene is equal to or higher than 2 wt.% of the composite material.

By selecting the amounts in the above-mentioned compositions such that the composite material at a melt state has a shear loss modulus G" which is less than a shear storage modulus G' at a shear strain $\gamma$ equal to or higher than 1 %, when determined using an amplitude sweep at a temperature of 180°C, with parallel plates geometry having a disc diameter of 25 mm and a gap of 0.6 mm in accordance with ISO standard 6721-10:2015, the composite material at a melt state has self-supporting capability that is suitable for fused granulate fabrication.

The method may further comprise shaping the solidifying composite material or the composite material into a form suitable for fused granulate fabrication, such as into a granular form. The temperature $T_{sub}$ is below 250°C to avoid degradation of the cellulose fibres, such as in the range of 160 to 250°C, more preferably in the range of 170 to 210°C, most preferably in the range of 180 to 200°C.

The invention is further described in the independent and dependent claims.

Brief description of the drawings

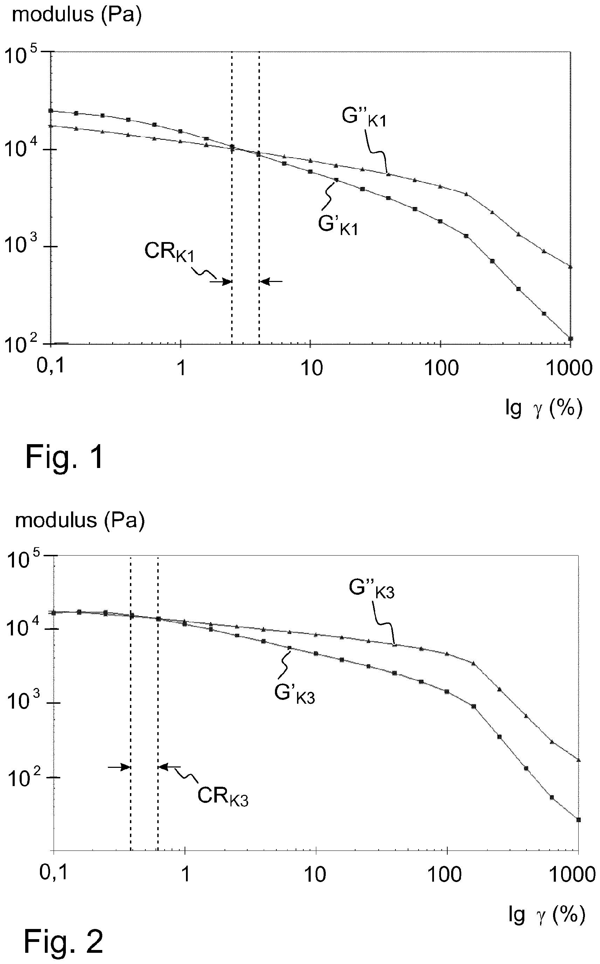

Figures 1 to 4 are diagrams representing the viscoelastic results of amplitude sweep analyses (0 to 1000% strain) at a temperature of 180°C. The diagrams show the shear strain $\gamma$ (%) plotted on the x-axis and storage and loss moduli (MPa) plotted on the y-axis; both axes being on a logarithmic scale.

Figure 1 represents results of a composite material sample K1 comprising melt strength enhancing agent that was based on vinyl acetate and vinyl versatate. The range $CR_{K1}$, wherein the shear storage modulus $G'_{K1}$ becomes larger than the shear loss modulus $G''_{K1}$, is indicated by a range between two dashed lines. The diagram demonstrates the effect of the melt strength enhancing agent to the rheological behavior of the composite material. When a low amount of shear strain $\gamma$ was applied to the sample K1 at a temperature of 180°C, the material possessed elastic response capability. When the amount of shear strain $\gamma$ applied to the sample K1 was increased above the cross-over point in the range $CR_{K1}$, the material lost the self-supporting capability.

Figure 2 represents results of a composite material sample K3 comprising polybutyrate adipate terephthalate. The range $CR_{K3}$, wherein the shear storage modulus $G'_{K3}$ becomes larger than the shear loss modulus $G''_{K3}$, is indicated by a range between two dashed lines. The diagram demonstrates the effect of polybutyrate adipate terephthalate to the rheological behavior of the composite material. Thus, when a low amount of shear strain $\gamma$ was applied to the sample K3 at a temperature of 180°C, the material possessed elastic response capability. When the amount of shear strain $\gamma$ applied to the sample K3 was increased above the cross-over point in the range $CR_{K3}$, the material lost the self-supporting capability.

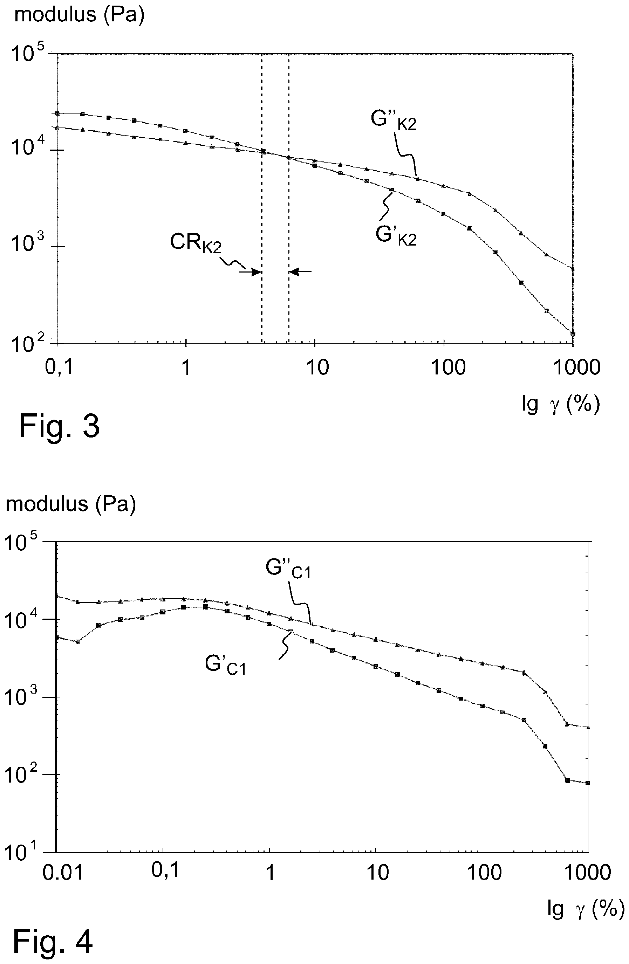

Figure 3 represents results of a composite material sample K2 comprising both polybutyrate adipate terephthalate and melt strength enhancing agent that was based on vinyl acetate and vinyl versatate. The range $CR_{K2}$, wherein the shear storage modulus $G'_{K2}$ becomes larger than the shear loss modulus $G''_{K2}$, is indicated by a range between two dashed lines. The diagram demonstrates the effect of the melt strength enhancing agent, when used together with polybutyrate adipate terephthalate, to the rheological behavior of the composite material. Thus, when a low amount of shear strain $\gamma$ was applied to the sample K2 at a temperature of 180°C, the material possessed elastic response capability. When the amount of shear strain $\gamma$ applied to the sample K2 was increased above the cross-over point in the range $CR_{K2}$, the material lost the self-supporting capability.

Figure 4 represents results of a composite material sample C1 without polybutyrate adipate terephthalate and melt strength enhancing agent that was based on vinyl acetate and vinyl versatate. As evident from the diagram, the shear storage modulus $G'_{C1}$ remains smaller than the shear loss modulus $G''_{C1}$ within the measured range, hence the sample C1 did not have a crossover point. Thus the sample C1 at a temperature of 180°C did not present any elastic response within the measured shear strain γ range.

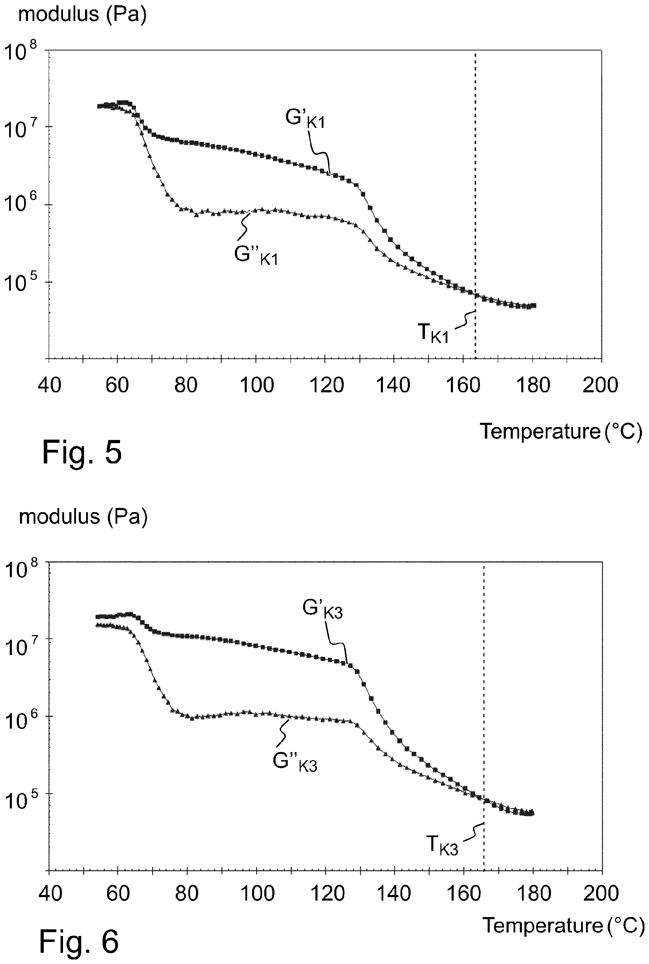

Figures 5 to 7 are diagrams representing the viscoelastic results of temperature sweep analyses at a temperature range of 50 to 180°C. The diagrams show the temperature (°C) plotted on the x-axis and storage and loss moduli (MPa) plotted on the y-axis; the y-axis being on a logarithmic scale.

Figure 5 represents results of a composite material sample K1 comprising melt strength enhancing agent that was based on vinyl acetate and vinyl versatate. The crossover temperature $T_{K1}$ of 164,0°C, after which the shear storage modulus $G'_{K1}$ is smaller than the shear loss modulus $G''_{K1}$, is indicated with a dashed line. The diagram demonstrates the effect of the melt strength enhancing agent to the rheological behavior of the composite material.

Figure 6 represents results of a composite material sample K3 comprising polybutyrate adipate terephthalate. The crossover temperature $T_{K3}$ of 166,6°C, after which the shear storage modulus $G'_{K3}$ is smaller than the shear loss modulus $G''_{K3}$, is indicated with a dashed line. The diagram demonstrates the effect of polybutyrate adipate terephthalate to the rheological behavior of the composite material.

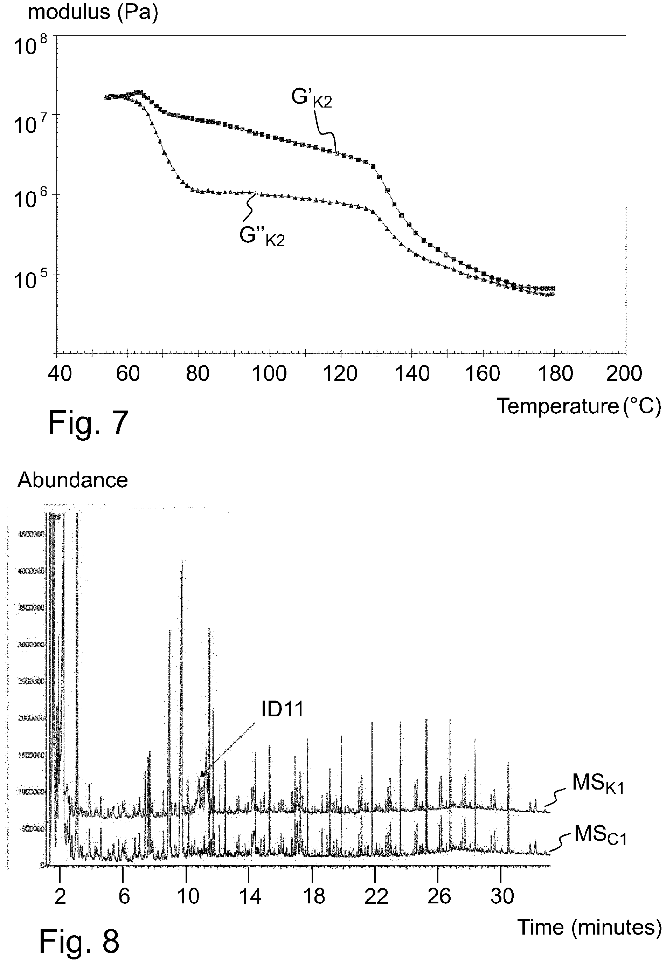

Figure 7 represents results of a composite material sample K2 comprising polybutyrate adipate terephthalate and melt strength enhancing agent that was based on vinyl acetate and vinyl versatate. As evident from the diagram, the shear storage modulus $G'_{K2}$ did not reach the shear loss modulus $G''_{K2}$ in the measured range, hence the sample K2 did not have a crossover point in the temperature sweep. The diagram demonstrates the effect of the melt strength enhancing agent, when used together with polybutyrate adipate terephthalate, to the rheological behavior of the composite material.

Figure 8 represents the results $MS_{K1}$, $MS_{C1}$ of a pyrolysis-gas chromatography-mass spectrometry (Py-GC-MS) analysis of a composite material sample K1 comprising melt strength enhancing agent that was based on vinyl acetate and vinyl versatate and composite material sample C1 without the melt strength enhancing agent. As can be observed from the diagram, the melt strength enhancing agent that was based on vinyl acetate and vinyl versatate can be identified from the diagram, since it produces a distinguishable peak ID11, corresponding to the presence of methyl ester of 2-ethyl-hexanoic acid (methyl 2-ethylhexanoate) in the sample K1, which is a decomposition product of a copolymer comprising vinyl acetate and vinyl versatate. The identified decomposition product was not present in the composite material sample C1.

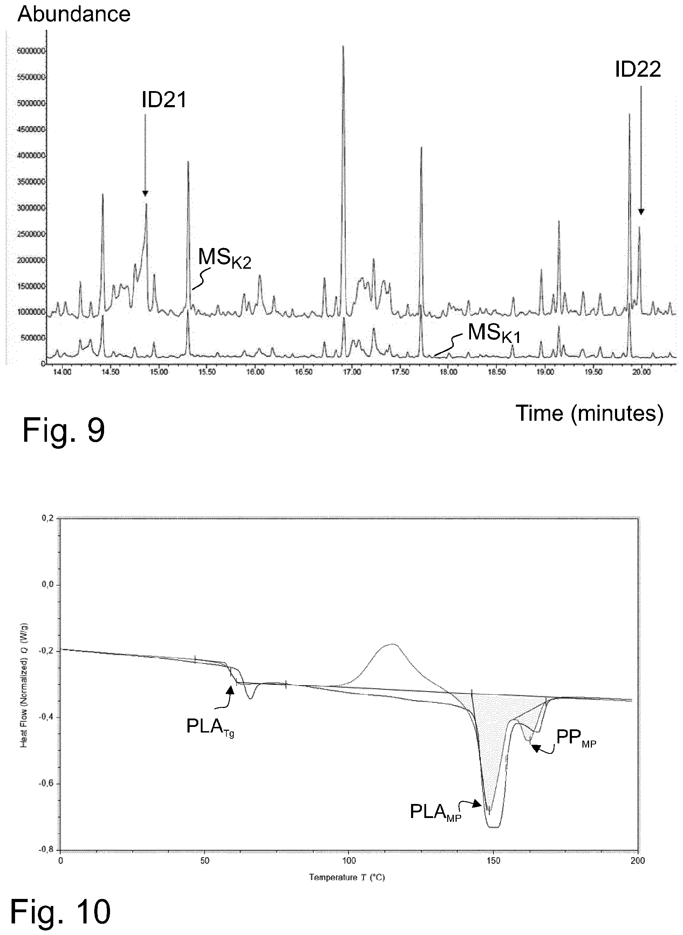

Figure 9 is a diagram representing the results $MS_{K1}$, $MS_{K2}$ of a pyrolysis-gas chromatography-mass spectrometry (Py-GC-MS) analysis of a composite material sample K1 comprising melt strength enhancing agent that was based on vinyl acetate and vinyl versatate and composite material sample K2 that further contained polybutyrate adipate terephthalate. As can be observed from the diagram, the two samples can be identified from each other, since polybutyrate adipate terephthalate produces distinguishable peaks ID21, ID22, corresponding to the presence of di-(2E)-2-buten-1-yl adipate and di-(2E)-2-buten-1-yl terephthalate, respectively, in the sample K2. These are not present in the sample K1, which did not contain polybutyrate adipate terephthalate.

Figure 10 represents the results of a differential scanning calorimetry (DSC) analysis of a reference composite material sample C1 that contained only polylactic acid, pulp that contains wood-based cellulose fibres and polypropylene, without polybutyrate adipate terephthalate and melt strength enhancing agent. The diagram shows the temperature (°C) plotted on the x-axis and heat flow (W/g) plotted on the y-axis.

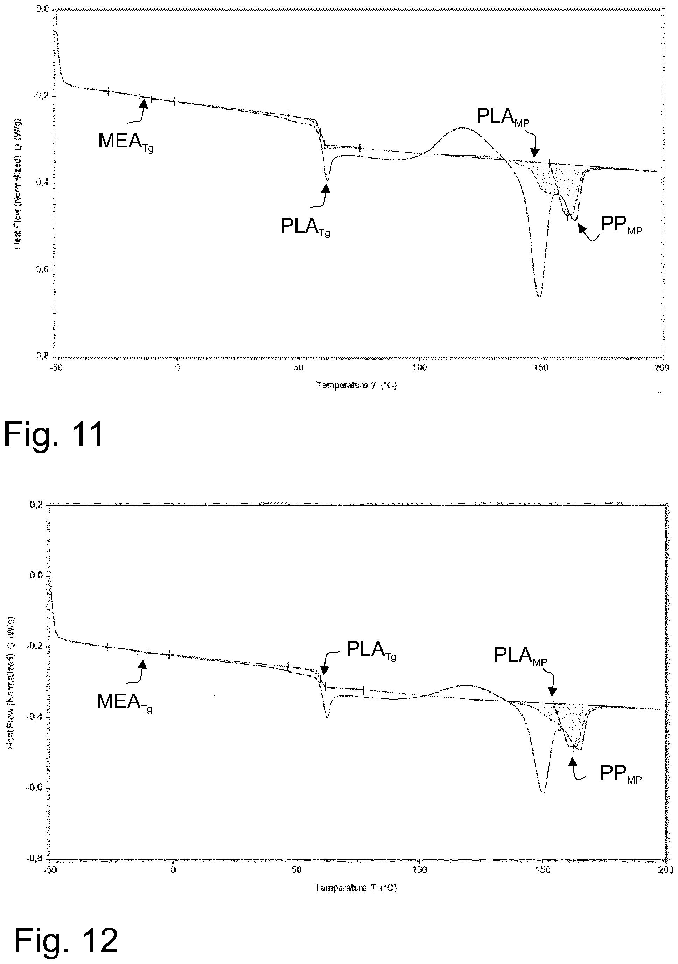

Figure 11 represents the results of a differential scanning calorimetry (DSC) analysis of a composite material sample K1 that contained polylactic acid, pulp that contains wood-based cellulose fibres, polypropylene and melt strength enhancing agent that consisted of a terpolymer based on vinyl acetate, vinyl versatate and ethylene. As can be observed from the diagram, the sample K1 produced a signal at a temperature in the range of -15°C, corresponding to the glass transition temperature $MEA_{Tg}$ of the melt strength enhancing agent. The diagram shows the temperature (°C) plotted on the x-axis and heat flow (W/g) plotted on the y-axis.

Figure 12 represents the results of a differential scanning calorimetry (DSC) analysis of a composite material sample K2 that contained polylactic acid, pulp that contains wood-based cellulose fibres, polypropylene, polybutyrate adipate terephthalate and melt strength enhancing agent that consisted of a terpolymer based on vinyl acetate, vinyl versatate and ethylene. As can be observed from the diagram, the sample K2 also produced a signal at a temperature in the range of -15°C, corresponding to the glass transition temperature $MEA_{Tg}$ of the melt strength enhancing agent. The diagram shows the temperature (°C) plotted on the x-axis and heat flow (W/g) plotted on the y-axis.

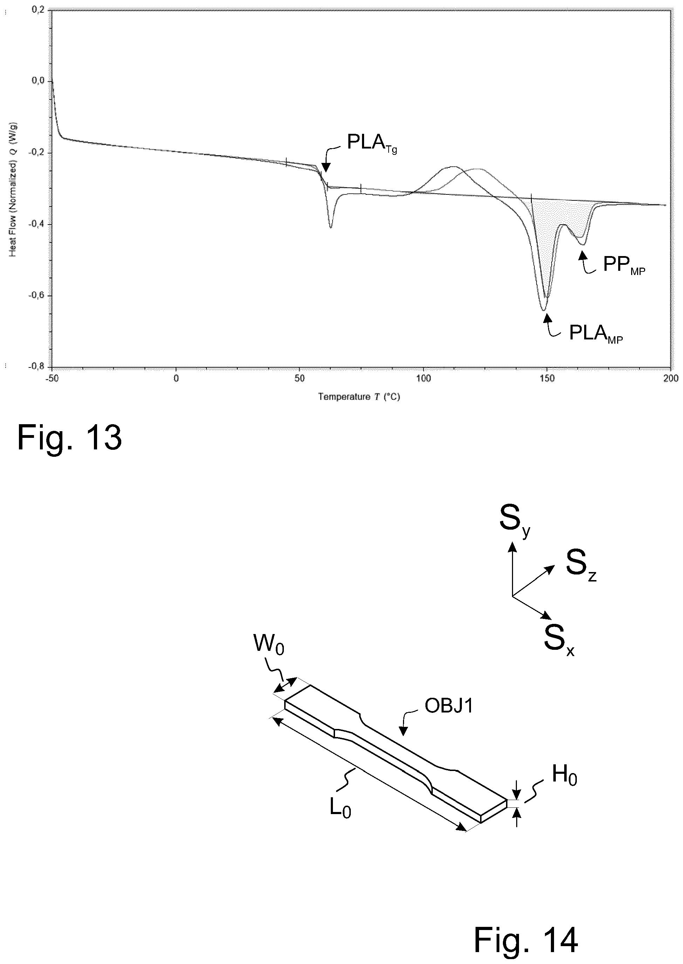

Figure 13 represents the results of a differential scanning calorimetry (DSC) analysis of a composite material sample K3 that contained polylactic acid, pulp that contains wood-based cellulose fibres, polypropylene and polybutyrate adipate terephthalate. The diagram shows the temperature (°C) plotted on the x-axis and heat flow (W/g) plotted on the y-axis.

Figure 14 is an illustration of a test specimen type 1 B having a gauge length $L_0$, width $W_0$ and a thickness $H_0$. The test specimen can be produced with additive manufacturing by printing layers along direction in $S_x$ parallel to the gauge length $L_0$, referred to as a printed test specimen type 1B. The test specimen type 1B may be used to determine mechanical properties, such as tensile strength and modulus, of the composite material according to ISO standard 527/50.

Detailed description

*A composite material*

A composite material in this context refers to material composed of two or more components, at least one of which is a polymer, which components have been mixed together by mechanical means and/or by heating, such that a composition is obtained, wherein the components may be distinguished but are no longer separable from each other by the same mechanical means. When in solid state, composite material has a shape. Thermoplastic composite material refers to composite material which comprises a thermoplastic polymer, such that the composition may be reversibly heated from a solid state to a melt state. At a melt state the composite material can flow, in particular when subjected to a shear force. At a melt state the composite material is typically referred to as composite melt. In a solid state the composite material has a defined shape, such as the shape of a granulate.

A composite material in this context further refers to material that has a composition that contains at least semi-crystalline polylactic acid in an amount equal to or higher than 25 wt.% of the composite material and pulp that contains wood-based cellulose fibres in an amount equal to or higher than 10 wt.% of the composite material. The composition may further contain other polymers, such as polypropylene, in an amount equal to or higher than 2 wt.% of the composite material. Advantageously, the composition may further contain melt strength enhancing agent that comprises or consist of a copolymer based on vinyl acetate and vinyl versatate. Advantageously, the melt strength enhancing agent may further contain or consist of a terpolymer based on vinyl acetate, vinyl versatate and ethylene. Advantageously, the composition may further contain polybutyrate adipate terephthalate. Advantageously, the amounts in the composition have been selected such that the composite material has mechanical properties at a solid state which are suitable for the intended end uses of the composite material, as well as viscoelastic properties at a melt state, such that the composite material at a melt state is suitable for fused granulate fabrication without a mould.

The suitable mechanical properties of the composite material may be expressed by a tensile modulus. The composite material may have a tensile modulus which is equal to or higher than 2100 MPa, advantageously equal to or higher than 2300 MPa, most advantageously equal to or higher than 2800 MPa, and a tensile strength, which is equal to or higher than 18 MPa, advantageously equal to or higher than 20 MPa, most advantageously equal to or higher than 22 MPa, when determined at 23°C, according to ISO standard 527/50, from a test specimen type 1B, as illustrated in Figure 14.

The viscoelastic properties may be determined from the composite material in a melt state by rheological means. The shear loss modulus G" represent the viscose portion of the material whereas the shear storage modulus G' represents the elastic portion of the material. When at a given temperature and/or at a given shear strain $\gamma$ the elastic portion of the composite material is larger than the viscose portion, the composite material acts as a solid. Correspondingly, when the elastic portion of the composite material is smaller than the viscose portion, the composite material acts as a fluid. The cross-over point represents a situation, wherein the loss modulus G" is equal to the shear storage modulus G', i.e. G" = G'. When a composite material has self-supporting capability in a melt state, this may be identified in an amplitude sweep measurement by a shear strain $\gamma$ range, wherein the shear storage modulus G' is larger than the shear loss modulus G", i.e. G" < G'. Correspondingly, a range wherein the loss modulus G" is larger to the shear storage modulus G', i.e. G" > G', indicates that the composite material in a melt state does not have self-supporting capability. A range wherein the cross-over point occurs, indicates the shift from elastic response to viscose response, or vice versa. When a sample at a melt state, at the beginning of an amplitude sweep measurement, has a shear storage modulus G' which is larger than the shear loss modulus G", i.e. G" < G', the sample has self-supporting capability at rest. Therefore, the range wherein the cross-over point occurs, represents the minimum amount shear strain $\gamma$, which is needed to lose the a self-supporting capability. Correspondingly, the same range indicates also the amount shear strain $\gamma$, below which the same sample again obtains the self-supporting capability. The cross-over point of an amplitude sweep therefore indicates a situation, wherein the curve of the shear storage modulus G' crosses the curve of the shear loss modulus G". The shear strain $\gamma$ , and the cross-over point wherein G" = G', may be determined with an amplitude sweep with parallel plates geometry having a disc diameter of 25 mm and a gap of 0.6 mm in accordance with ISO standard 6721-10:2015. Typically, the shear strain applied on the sample is incremented from rest (0% strain) to 1000 %.

With a composite material that contains melt strength enhancing agent that comprises a copolymer based on vinyl acetate and vinyl versatate or a terpolymer based on vinyl acetate, vinyl versatate and ethylene, the shear strain $\gamma$ at the cross-over point may be 2,5 % or higher, such as in the range of 2,5 to 4 %, when measured at a temperature of 180°C. Correspondingly, the shear strain $\gamma$ at the cross-over point may be 4 % or higher, such as in the range of 4 to 6,3 %, when measured at a temperature of 190°C. With a composite material that contains polybutyrate adipate terephthalate but not the melt strength enhancing agent, the shear strain $\gamma$ at the cross-over point may be less than 1 % , such as in the range of 0,4 to 0,6 %. Correspondingly, the shear strain $\gamma$ at the cross-over point may be less than 2,5 %, such as in the range of 1,6 to 2,5 %, when measured at a temperature of 190°C. With a composite material that contains both polybutyrate adipate terephthalate and melt strength enhancing agent, the shear strain $\gamma$ at the cross-over point may be 4 % or higher, such as in the range of 4 to 6,3 %, when measured at a temperature of 180°C. Correspondingly, the shear strain $\gamma$ at the cross-over point may be 15 % or higher, such as in the range of 15 to 25 %, when measured at a temperature of 190°C.

*Polylactic acid*

Polylactic acid refers to thermoplastic aliphatic polyester, having a chemical formula $(C_3H_4O_2)_n$. Polylactic acid is also known as polylactide, polylactic acid polymer and PLA. Polylactic acid is a biodegradable polymer, as defined according to standard SFS-EN-13432. Polylactic acid may be derived from many renewable resources, such as from crop residues of corn, tapioca or sugarcane.

Polylactic acid is typically manufactured by direct condensation of lactic acid monomers or by ring-opening polymerization of lactide, which is a cyclic diester. Lactic acid (2-hydroxypropanoic acid) is a chiral molecule, existing in L (levo) and D (dextro) isomers (enantiomers). Lactide is the cyclic dimer (diester) of lactic acid, which exists as four different stereoisomers: L,L-lactide, D,D-lactide and D,L-lactide (meso-lactide) and D,D+L,L-lactide (rasemic-lactide), which is an equimolar combination of L- and D- lactides. Due to the chiral nature of lactic acid. Due to the chiral nature of lactic acid, the polylactic acid may exist in several forms, such as poly-L-lactide or poly-D-lactide.

Homopolymers and stereo copolymers, with varying physical and mechanical properties and degradation kinetics can be produced by polymerizing the different lactide stereoisomers together. Homopolymer of L,L-lactide (PLLA, also referred to as PLA) is semi-crystalline. In an example, stereo copolymers of L- lactide and D-lactide (or L- and DL-lactide) are amorphous if presence of D-lactide repeating units is more than 12.5%. Stereo copolymer, poly-(DL)lactide is amorphous with a $T_g$ of 57 °C. Generally, the increase in the amount of D- lactide may result in a lower initial strength and faster mechanical degradation. Thus semi-crystalline PLA is preferred when higher mechanical properties are required. As well as the configurational structure and morphology also the molecular weight of the polymer influences the mechanical properties and degradation kinetics.

Semi-crystalline polylactic acid, PLA, typically undergoes thermal degradation at temperatures above 200°C. Polylactic acid homopolymers, such as poly-L-lactide, generally have a glass-transition temperature $T_g$ in the range of 55-65°C and a melting point temperature $T_{mp}$ in the range of 150-178°C. A suitable processing temperature for polylactic acid is therefore typically quite narrow, e.g. in the range of 185-200°C. The poly-L-lactide may have a crystallinity in the range of 37% and a tensile modulus in the range of 2.7-16 GPa. The melting temperature of poly-L-lactide can be increased by 40-50°C and its heat deflection temperature can be increased from approximately 60°C to up to 190°C by physically blending the polymer with PDLA (poly-D-lactide).

*Pulp types*

In this context, pulp refers to cellulose containing material originating from wooden material, which has been processed into fibrous form, such as fibers. Depending of the processing method, the pulp may have been obtained via mechanical methods, chemical methods, or by using a semi-chemical method, wherein a combination of mechanical and chemical methods is used.

Mechanical pulp refers to cellulose pulp obtained from a process wherein fibers have been produced through mechanical methods. An example of a mechanical method is, for example, grinding-stone ground wood (SGW). When the wood is steamed prior to grinding it is known as pressure ground wood pulp (PGW). Steam treatment may be used to reduce the amount of energy needed in pulping and to decrease the mechanical damage of the process to the fibers. Compared to chemical pulping, mechanical pulping typically gives a higher yield of cellulose in a pulp form. The yield of mechanical pulp may be in the range of 85 to 95 wt.-% of the raw material. As pulping by a mechanical method does not comprise a chemical treatment, mechanical pulp contains large amount of fine particles, hemicellulose and lignin compounds. Mechanical pulp therefore has a high opacity level. Mechanical pulp may also have limited brightness, at least compared to chemical pulps. Mechanical pulp containing lignin compounds may react with light and oxygen, which leads to darkening of the pulp colour, denoted as 'yellowing'. Mechanical pulp has a broad fiber size distribution, thus the tensile and tear strength of mechanical pulp is relatively weak, when compared to e.g. chemical pulp.

Thermomechanical pulp, abbreviated as TMP, is pulp produced by processing wood chips using heat and a mechanical refining. In thermomechanical pulping, mechanical force such as crushing or grinding is applied to wood chips having a moisture content in the range of 25 to 30 wt.-%, such that heat and water vapour is generated, which softens the lignin in the chips such that the chips are separated into fibers. The pulp may be then screened and cleaned, and the operation may be repeated to remaining chips until a desired fibrillation level is obtained. The yield of thermomechanical pulp may be in the range of 85 to 95 wt.-% of the raw material. Compared to a chemical pulping process, when manufacturing thermomechanical pulp, the aim is to facilitate the refining of the fibers, not to remove lignin.

Chemithermomechanical pulp, abbreviated as CTMP, is a hybrid process wherein the wood chips are first pretreated by applying chemicals on the chips and then refined to pulp by mechanical means. In chemithermomechanical pulping, wood chips are pretreated with sodium carbonate, sodium hydroxide, sodium sulphite and/or other chemicals prior to mechanical refining, such that heat and water vapour is generated, which softens the lignin in the chips such that the chips are separated into fibers. The mechanical refining may be done with equipment similar to used when obtaining mechanical pulp. When manufacturing chemithermomechanical pulp, the conditions of the chemical treatment are less vigorous than in a chemical pulping process. Typically, a lower temperature, shorter duration and less extreme pH is used. As in thermomechanical pulp, the aim is to facilitate the refining of the fibers, not to remove lignin. Chemithermomechanical pulp therefore may comprise lignin and other wood originating compounds in addition to cellulose fibers.

Bleached chemithermomechanical pulp, abbreviated as "BCTMP", may be produced from chemithermomechanical pulp by bleaching, to increase the brightness and whiteness of the pulp. The chemicals used to bleach pulp may comprise various oxidising compounds such as chlorine dioxide, oxygen, ozone and/or hydrogen peroxide. The bleached chemithermomechanical pulp may have a lignin content of less than 10 wt.%, such as less than 5 wt.% or less than 2 wt.% of the weight of the pulp.

Chemical pulp refers to wood-based cellulose fibres, which have undergone a chemical pulping process. The purpose of chemical pulping is to degrade and dissolve the lignin in wood so that the cellulose fibres can be separated without mechanical treatment. Compared to mechanical pulping, the chemical cooking also preserves better the original cellulose fibre length. However, this delignification process also degrades considerable amounts of hemicelluloses and in lesser amounts cellulose fibres. For this reason, the delignification process is stopped before significant losses of cellulose and hemicelluloses, while leaving less than 10 % of the original lignin in the pulp. The delignification process used to break down lignin is referred to as a chemical cooking. A chemical pulping process thus removes nearly all of the lignin and at least part of the hemicelluloses, while preserving the fibre structure and length better than semi-chemical or mechanical methods. A chemical pulping process therefore provides more processed cellulose fibres that has excellent physical properties, such as stiffness and rigidity, which is not obtained with mechanical or semi-mechanical pulping processes. A chemical pulping process further provides cellulose fibres containing pores. Examples of chemical pulping processes are, for example, the sulphite pulping process or the Kraft pulping process. The Kraft pulping process uses sodium sulphide and alkali to separate cellulose fibres from other compounds in the wood material. Nonlimiting examples of chemical pulp are Kraft plulp, sulphite pulp and dissolving pulp.

Kraft process is the most widely used cooking method in the pulp industry and chemical pulp from a Kraft process is available in large amounts. Typically, the chemical pulp has a lignin content of less than 10 wt.%, such as less than 5 wt.% or less than 2 wt.% of the weight of the chemical pulp. In applications wherein essentially lignin free chemical pulp is desired, the lignin content of the chemical pulp may be even lower, such as less than 1 wt.% or less than 0.5 wt.%, such as in the range of 0.01-1.00 wt-%, preferably in the range of 0.01-0.50 wt-% of the weight of the chemical pulp. Thus, the lignin content of wood-based cellulose fibres, which have undergone a chemical pulping process, is preferably equal to or less than 1 wt.%, preferably equal to or less than 0.5 wt.% of the amount of wood-based cellulose fibres.

The remaining lignin in the chemical pulp can be removed through bleaching processes, thereby providing bleached chemical pulp. Bleached chemical pulp thus typically contains lignin in an amount of less than 1 wt.% of the bleached chemical pulp. Bleaching is typically performed in multi-stage sequence of steps, which utilize different bleaching chemicals. Bleached chemical pulp presents superior properties when compared to conventional wooden material in fibre-based polymer composites. The Kraft process, in particular, decreases considerably the amounts of hemicelluloses, lignin, wood extractives and inorganics in the pulp material such that only residual traces of these compounds remain; thereby the bleached chemical pulp may be denoted as essentially 'lignin free'. Bleached chemical pulp if stiff and strong, because the flexible lignin and hemicellulose components are mostly removed. Thus, the highly ordered, rigid cellulose fibres may be used to provide a reinforcing effect on a fibre-based polymer composite. In bleached chemical pulp the cellulose fibrils and hydroxyl groups become more accessible on the surface of the cellulose fibres.

*Preparation of composite materials for rheological studies, mass spectrometry studies and thermomechanical studies*

Reference is made to Figures 1 to 7, which are experimental rheology results of composite materials, to Figures 8 and 9, which are experimental mass spectrometry analysis results of the same composite materials, and to Figures 10 to 13, which are experimental DSC results of the same composite materials.

The viscoelastic and mechanical properties of composite materials were studied of samples that comprised pulp that contains wood-based cellulose fibres, semi-crystalline polylactic acid and polypropylene. The effect of melt strength enhancing agent and polybutyrate adipate terephthalate was studied by adding these compounds to some of the samples, as indicated below. The composite material samples were manufactured by mixing together

- pulp that contains wood-based cellulose fibres,
- semi-crystalline polylactic acid,
- polypropylene,
- maleic acid grafted polypropylene, and, when applicable,
- polybutyrate adipate terephthalate and/or
- melt strength enhancing agent that comprises

    - a copolymer based on vinyl acetate and vinyl versatate or
    - a terpolymer based on vinyl acetate, vinyl versatate and ethylene,

, such that a composition was formed. The composition was then heated, while mixing, to a temperature $T_{sub}$ of 195°C, which was above the melting point of the composition, thereby producing homogeneous composite material at a melt state. When the temperature of the composite melt was allowed to decrease below the melting point of the composition, the composite melt solidified, thereby producing composite material at a solid state. A representative amount of each sample thus prepared was then used for testing the mechanical and viscoelastic properties of the material.

When semi-crystalline polylactic acid is mixed with polypropylene and pulp that contains wood-based cellulose fibres, the processing temperature $T_{sub}$ is below 250°C, in order to avoid decomposition of the cellulose fibres. Preferably the processing temperature $T_{sub}$ is in the range of 160 to 250°C, most preferably in the range of 180 to 200°C, which is dependent of the melting points of the semi-crystalline polylactic acid and the polypropylene.

In the experimental studies disclosed hereafter, composite material samples having the following compositions were tested:

Sample K1 contained

- semi-crystalline polylactic acid in an amount of 57,5 wt.% of the composite material,
- wood-based cellulose fibres which had undergone a chemical pulping process in an amount of 20 wt.% of the composite material,
- polypropylene homopolymer in an amount of 10 wt.% of the composite material,
- maleic anhydride grafted polypropylene in an amount of 2,5 wt.% of the composite material, and
- melt strength enhancing agent consisting of a terpolymer based on vinyl acetate, vinyl versatate and ethylene in an amount of 10 wt.% of the composite material.

Sample K2 contained

- semi-crystalline polylactic acid in an amount of 47,5 wt.% of the composite material,
- wood-based cellulose fibres which had undergone a chemical pulping process in an amount of 20 wt.% of the composite material,
- polypropylene homopolymer in an amount of 10 wt.% of the composite material,
- maleic anhydride grafted polypropylene in an amount of 2,5 wt.% of the composite material,
- melt strength enhancing agent consisting of a terpolymer based on vinyl acetate, vinyl versatate and ethylene in an amount of 10 wt.% of the composite material, and
- polybutyrate adipate terephthalate in an amount of 10 wt.% of the composite material.

Sample K3 contained

- semi-crystalline polylactic acid in an amount of 57,5 wt.% of the composite material,
- wood-based cellulose fibres which had undergone a chemical pulping process in an amount of 20 wt.% of the composite material,

- polypropylene homopolymer in an amount of 10 wt.% of the composite material,
- maleic anhydride grafted polypropylene in an amount of 2,5 wt.% of the composite material, and
- polybutyrate adipate terephthalate in an amount of 10 wt.% of the composite material.

The reference sample C1 contained

- semi-crystalline polylactic acid in an amount of 67,5 wt.% of the composite material,
- wood-based cellulose fibres which had undergone a chemical pulping process in an amount of 20 wt.% of the composite material,
- polypropylene homopolymer in an amount of 10 wt.% of the composite material, and
- maleic anhydride grafted polypropylene in an amount of 2,5 wt.% of the composite material.

*Thermo-mechanical properties* <u>*of the composite material*</u>

Reference is made to Table 1 below, which illustrates some mechanical and thermal properties that were tested according to standard procedures of samples of composite materials. The density (g/cm$^3$) was determined according to standard ISO 1133. The thermal properties were determined using a differential scanning calorimetry (TA Instruments Discovery DSC 250 with autosampler and RCS90 cooler). For each DSC measurement, an amount in the range of 3 to 9 mg per sample was used. Each sample used a heating cycle from -50°C to 200°C in a nitrogen atmosphere, following the principles of standards ISO 11357-2 and ISO 11357-3 (1999), using a linear rate of 10°C/min.

The mechanical properties of composite material samples were studied by preparing samples that were 3D printed with an addition manufacturing system. Reference is made to Figure 14, which is an illustration of a dumb-bell-shaped test specimen type 1B, referred to as OBJ1, having a gauge length $L_0$ = 80 mm, width $W_0$ = 10 mm and a thickness $H_0$ = 4 mm. The test specimen OBJ1 can be produced using additive manufacturing by extrusion, wherein layers of the composite material may be printed along direction $S_x$, which is parallel to the gauge length $L_0$ of the test specimen OBJ1. Thus printed test specimen OBJ1 is referred to as a printed test specimen type 1B, which has interface layers parallel to the direction $S_x$. Alternatively, the test specimen can be produced using additive manufacturing by extrusion such that the layers are printed along direction $S_z$, which is along the width $W_0$ and perpendicular to the gauge length $L_0$. Thus printed test specimen OBJ1 is referred to as a z-direction printed test specimen type 1B. The direction of the printing has an effect to the mechanical properties of the test specimen 1B. The test specimen type 1B may be used to determine mechanical properties, such as tensile strength and modulus, of the composite material according to ISO standard 527/50.

The tensile strength of samples K1, K2 and K3 was determined at a test speed of 50 mm/min, at a temperature of 23°C, in accordance with standard ISO 527-2 (version 2012). The tensile modulus (MPa) was determined at a test speed of 1mm/min, at a temperature of 23°C, in accordance with standard ISO 527-2 (version 2012). The composite material samples used in the tensile strength and modulus had a dumb-bell-shape with maximum dimensions of 80x10x4 mm, as illustrated in Figure 14. The layers were printed flat, either in the direction $S_x$ or in the direction $S_z$ parallel to the platform surface with 0.2 mm layer thickness, at a lateral movement of 30 mm/s, using 100% infill. A nozzle diameter of 0,8 millimeter was used to produce the test specimens. The amount of pulp that contains wood-based cellulose fibres and polypropylene in the composite material samples K1, K2 and K3 was maintained in the same level, to study the effect of the melt strength enhancing agent and the polybutyrate adipate terephthalate to the composite material.

Table 1. Mechanical properties of composite material samples K1, K2 and K3.

| Property | Unit | K1 | K2 | K3 | Standard |
|---|---|---|---|---|---|
| **Physical** | | | | | |
| Density | g/cm$^3$ | 1,2 | 1,1 | 1,1 | ISO 1133 |
| Melt flow index (190°C/10 kg) | g/10min | 16 | 17 | 20 | ISO 1133 |
| **Mechanical** | | | | | |
| Tensile Modulus, 23°C (printed) | MPa | 2800 | 2300 | 2100 | ISO 527/1 |
| Tensile strength, 23°C (printed) | MPa | 26 | 20 | 18 | ISO 527/50 |
| **Thermal** | | | | | |
| Glass transition ($T_g$) | °C | 59 | 59 | 59 | ISO 11357 |
| Melting point ($T_{mp}$) | °C | 148 | 149 | 150 | ISO 11357 |

The results of the mechanical testing indicated, that the composite material sample K1, which contained the melt strength enhancing agent, had the highest mechanical properties, when determined as the tensile strength and/or the tensile modulus. This was evidenced in printed test specimen type 1B that has been produced in a direction $S_x$ parallel to the gauge length $L_0$ of the test specimen type 1B. The results of the mechanical testing further indicated, that the composite material sample K2, which contained both the melt strength enhancing agent and polybutyrate adipate terephthalate, had higher mechanical properties than the composite material sample K3, which contained polybutyrate adipate terephthalate without the melt strength enhancing agent.

Of notice is, that the mechanical properties of the composite material, when determined by the tensile strength and tensile modulus, are inversely proportional to the melt flow index. The results of the melt flow index testing further indicated, that the composite material sample K3, which contained polybutyrate adipate terephthalate without the melt strength enhancing agent, had the highest melt flow index level. Semi-crystalline polylactic acid used for additive manufacturing has a melt flow index, which typically is in the range of 20 to 85 g/10 min (190°C, 10 kg, ISO 1133). Typically, polypropylene has a melt flow index in the range of 45 to 110 g/10 min (230°C, 2.16 kg, ISO 1133). The melt flow index of polypropylene is therefore considerably higher than the melt flow index of polylactic acid. Wood-base cellulose fibre has the effect of reducing the melt flow index of a composite material. Comparison of the results of samples K1, K2 and K3 thus demonstrates that both the melt strength enhancing agent and the polybutyrate adipate terephthalate have an effect to the melt flow index. These compounds can thus be used to adjust the rheological properties of a composite at a melt state.

The results therefore evidenced that a composite material that comprised

- polybutyrate adipate terephthalate and/or
- a melt strength enhancing agent that comprises

    - a copolymer based on vinyl acetate and vinyl versatate or
    - a terpolymer based on vinyl acetate, vinyl versatate and ethylene, may have

- a tensile modulus equal to or higher than 2100 MPa, and
- a tensile strength equal to or higher than 18 MPa, when determined according to ISO standard 527/50 from a printed dumb-bell-shaped test specimen type 1B (OBJ1) at a speed of 50 mm/min, at a temperature of 23°C.

The results further evidenced that a composite material that comprised

- polybutyrate adipate terephthalate and
- a melt strength enhancing agent that comprises

    - a copolymer based on vinyl acetate and vinyl versatate or
    - a terpolymer based on vinyl acetate, vinyl versatate and ethylene, may have

- a tensile modulus equal to or higher than 2300 MPa, and
- a tensile strength equal to or higher than 20 MPa, when determined according to ISO standard 527/50 from a printed dumb-bell-shaped test specimen type 1B (OBJ1) at a speed of 50 mm/min, at a temperature of 23°C.

The results further evidenced that a composite material that contained a melt strength enhancing agent that comprises

- a copolymer based on vinyl acetate and vinyl versatate or
- a terpolymer based on vinyl acetate, vinyl versatate and ethylene,

    - but did not contain polybutyrate adipate terephthalate may have
    - a tensile modulus equal to or higher than 2800 MPa, and
    - a tensile strength equal to or higher than 26 MPa, when determined according to ISO standard 527/50 from a printed dumb-bell-shaped test specimen type 1B (OBJ1) at a speed of 50 mm/min, at a temperature of 23°C.

Thus, the polybutyrate adipate terephthalate, while useful for the viscoelastic behaviour and flow properties of the composite material at a melt state, reduces the mechanical properties of a solid object formed of the composite material.

*Viscoelastic properties of composite materials*

Complex viscosity $\eta^*$, also known as dynamic viscosity, is a measure of the minimum viscosity that a melt of a composite material achieves when cooling from a temperature above the glass transition temperature $T_g$ prior to commencing to solidify. Complex viscosity $\eta^*$ is obtained by dividing complex modulus $G^*$ with angular frequency $\omega$. Complex modulus $G^*$ is measured by means of oscillation rheology techniques. Complex modulus $G^*$ is a property of viscoelastic materials, and is defined as a ratio of stress to strain under vibratory conditions. It quantifies the rigidity of material when exposed to a stress below the yield stress. Complex modulus indicates the flexibility or stiffness of material. Complex viscosity $G^*$ values are typically given in units of pascal-second, abbreviated as Pa·s. The complex modulus $G^*$ is also known as dynamic modulus, and may be expressed according to equation 1:

$$G^* = G' + iG'' \qquad \text{(Equation 1)}$$

wherein G' represents the shear storage modulus, G" represents the shear loss modulus and i represents an imaginary unit.

Angular frequency $\omega$ refers to the oscillation frequency measured in radians per second. The correspondence of angular frequency $\omega$ to frequency f is expressed according to equation 2:

$$\omega = 2\pi \cdot f \qquad \text{(Equation 2)}$$

wherein the angular frequency $\omega$ is radians per seconds and the frequency f is in Hertz.

A strain sweep in this context refers to a test wherein the temperature and the angular frequency $\omega$ are maintained constant and the shear strain amplitude A is varied, according to equation 3, below

$$\gamma(t) = \gamma A \cdot \sin\omega t \qquad \text{(Equation 3)}$$

wherein $\gamma(t)$ refers to the shear strain $\gamma$ at a time point t, $\gamma_A = \gamma_A(t)$, i.e. the shear strain at amplitude A, at the time point t, and $\omega$ is the angular frequency.

The shear strain amplitude A refers to the maximum of the oscillatory motion. As the amount of shear strain $\gamma$ applied is incremented, the moduli G' and G" can be plotted as a function of the shear strain $\gamma$ in a sample.

A temperature sweep in this context refers to a test wherein the strain and the angular frequency $\omega$ are kept constant in linear viscoelastic region and the temperature is varied. The measured moduli G' and G" can thus be plotted as a function of the temperature (°C) in a sample.

In the rheology studies performed herein, the rheological properties of the composite melts were determined by using an Anton Paar MCR 301 oscillatory rheometer with a parallel-plate geometry in test conditions as disclosed below.

Measurement setup: PP25-SN5319, Parallel plates geometry, disc diameter 25 mm, gap 0.6 mm. The tests were conducted following the manufacturer's instructions and according to ISO standard 6721-10:2015, which is equivalent to standard ASTM D4440-15.

Test conditions in temperature sweep:

Strain amplitude: 0.1 %, in linear viscoelastic region,
Frequency: 1 Hz,
Temperature ramp: 180 to 50°C, linear rate of 5°C/min, Continuous Ramp.

Test conditions in amplitude sweep:

Temperature 180°C (first experiment) and 190°C (second experiment)
Angular frequency: 1 rad/s,
Strain amplitude: 0.1 to 1000 %.

Reference is made to Figures 1 to 7.

Figures 1 to 4 are experimental results of amplitude sweeps at a temperature of 180°C, performed on composite material samples K1, K2, K3 and C1. The vertical axis in the figures 1, 2, 3 and 4 represents the determined modulus in units of Megapascal (MPa), in logarithmic scale. The horizontal axis in the figures 1, 2, 3 and 4 represents the applied shear strain $\gamma$ from rest (0%) to 1000 %, in logarithmic scale.

Figures 5 to 7 are experimental results of temperature sweeps at a temperature range from 180 to 50°C, performed on composite material samples K1, K2, K3. The vertical axis in the figures 1, 2, 3 and 4 is the determined modulus in units of Megapascal (MPa), in logarithmic scale. The horizontal axis in the figures 5, 6 and 7 represents the temperature in Celsius grades.

The curves $G'_{K1}$, $G'_{K2}$, $G'_{K3}$, $G'_{C1}$ in the figures 1 to 7 represent the measured shear storage modulus curves of samples K1, K2, K3 and reference sample C1. Respectively, the curves $G''_{K1}$, $G''_{K2}$, $G''_{K3}$, $G''_{C1}$ represent the measured shear loss modulus curves of the same samples K1, K2, K3 and reference sample C1.

With reference to Figure 4, the diagram shows that in the reference sample C1, the shear storage modulus $G'_{C1}$ did not reach the shear loss modulus $G''_{C1}$ during the measured shear strain amplitude range. When increasing the amount of shear strain $\gamma$ applied to the material from rest (0%) to 1000%, the shear storage modulus $G'_{C1}$ remained below the shear loss modulus $G''_{C1}$ throughout the tested range. This meant that the reference sample C1 did not display any elastic response to the applied shear strain $\gamma$ over the whole range. In other words, the reference sample C1, which did not contain polybutyrate adipate terephthalate or the melt strength enhancing agent, did not have a self-supporting capability in a melt state. The reference sample C1 was not suitable for fused granulate fabrication, either.

With reference to Figure 2, the diagram shows that in the sample K3, at low amounts of shear strain $\gamma$ applied to the composite melt sample, the shear loss $G''_{K3}$ and shear storage $G'_{K3}$ moduli curves are substantially constant. The results indicate, that with polybutyrate adipate terephthalate, the linear-viscoelastic range of the composite melt may be improved. However, already at a shear strain $\gamma$ of less than 1%, more specifically within the range $CR_{K3}$ of 0,4 to 0,6%, the shear loss modulus $G''_{K3}$ becomes larger than the shear storage modulus $G'_{K3}$, i.e. $G''_{K3} < G'_{K3}$, which means that the sample starts to behave as a fluid and loses the self-supporting capability. At a temperature of 180°C, this range $CR_{K3}$ indicates the threshold for shear force, wherein the composite melt that is settling down upon extrusion begins to support its own weight. When the shear strain $\gamma$ is less than the cross-over point within the range $CR_{K3}$, the composite melt has an elastic response to the applied shear strain. Thus, at this region the sample has a self-supporting capability in a melt state.

With reference to Figure 1, the diagram shows that in the sample K1, at low amounts of shear strain $\gamma$ applied to the composite melt sample, the shear loss $G''_{K1}$ and shear storage $G'_{K1}$ moduli curves are not as constant as with sample K3. The results indicate, that a melt strength enhancing agent consisting of a terpolymer based on vinyl acetate, vinyl versatate and ethylene does not provide as good linear-viscoelastic range as polybutyrate adipate terephthalate. However, the self-supporting capability of sample K1 was much better. Sample K1 presented a shear loss modulus $G''_{K1}$ which is less than a shear storage modulus $G'_{K1}$ at a shear strain $\gamma$ that is equal to or higher than 1%, unlike sample K3. More specifically, within range $CR_{K1}$ when the shear strain is between 2,5 and 4,0%, the shear loss modulus $G''_{K1}$ becomes larger than the shear storage modulus $G'_{K1}$, i.e. $G''_{K1} < G'_{K1}$. At a temperature of 180°C, this range $CR_{K1}$ indicates the threshold for shear force, wherein the composite melt that is settling down upon extrusion begins to support its own weight. As the sole difference between samples K3 and K1 is the presence of 10 wt.% of polybutryrate in the sample K3, compared to the 10 wt.% of melt strength enhancing agent consisting of terpolymer based on vinyl acetate, vinyl versatate and ethylene in the sample K1, the difference between the moduli levels and cross-over ranges reflects the effect of these compounds to the composite material composition. This means that compared to polybutyrate adipate terephthalate, a melt strength enhancing agent consisting of a terpolymer based on vinyl acetate, vinyl versatate and ethylene starts to behave as a fluid and lose the self-supporting capability at a higher amount of shear strain $\gamma$. This property facilitates the fused granulate fabrication. The improved elastic response to shear stain indicates that the composite material may be subjected to higher shear forces upon extrusion without losing the self-supporting capability of the composite melt. Further, the composite melt obtains the self-supporting capability back already at higher shear forces, when compared to the sample K3, once the composite melt has been deposited from the nozzle.

With reference to Figure 3, the diagram shows that in the sample K2, at low amounts of shear strain $\gamma$ applied to the composite melt sample, the shear loss $G'_{K2}$ and shear storage $G'_{K2}$ moduli curves are not as constant as with sample K3, either. However, the results indicate unexpectedly, that when the composite melt contained both polybutyrate adipate terephthalate and melt strength enhancing agent consisting of a terpolymer based on vinyl acetate, vinyl versatate and ethylene, the self-supporting capability of the composite melt was much better than if one of the components was present without the other. The sample K2, too, presented a shear loss modulus $G''_{K2}$ which is less than a shear storage modulus $G'_{K1}$ at a shear strain $\gamma$ that is equal to or higher than 1%. More specifically, the shear loss modulus $G''_{K1}$ becomes larger than the shear storage modulus $G'_{K2}$, i.e. $G''_{K2} < G'_{K2}$ within range $CR_{K2}$, when the shear strain is between 4,0 and 6,3%. This, most likely, is due to interaction of the two components. A composition comprising polybutyrate adipate terephthalate and a melt strength enhancing agent comprising or consisting of a copolymer based on vinyl acetate and vinyl versatate or a terpolymer based on vinyl acetate, vinyl versatate and ethylene may therefore be used to promote the self-supporting capability of a composite melt such that much higher shear forces may be used, than when using only polybutyrate adipate terephthalate. These two components may therefore be used to enhance the melt strength properties of the composite material for fused granulate fabrication in elevated temperatures and high printing speeds.

Reference is made to Figures 5 to 7, which show the shear storage modulus curves $G'_{K1}$, $G'_{K2}$ and $G'_{K3}$ and the shear loss modulus curves $G''_{K1}$, $G''_{K2}$ and $G''_{K3}$ as a function of temperature of composite material samples K1, K2 and K3. The shear storage modulus, denoted as $G'$, measures the stored energy within the material and thus represents the elastic portion. The shear loss modulus, denoted as $G''$, measures the energy dissipated as heat and thus represents the viscous portion. When the shear storage modulus $G'$ is larger than the shear loss modulus $G''$, the composite material behaves as a viscoelastic solid. In the opposite case, when $G'' > G$, the sample has the properties of a viscoelastic fluid. The dashed lines $T_{K1}$ and $T_{K3}$ in Figures 5 and 6 represent the cross-over temperatures of the samples K1 and K3, i.e. the intersection point of the two curves, wherein the shear loss modulus $G''$ is equal to the shear storage modulus $G'$. The ratio of the two moduli $G''$ and $G'$, therefore, is very effective in describing the cohesive strength of the composite material composition in a melt state.

As evidenced by Figure 5, the cross-over point $T_{K1}$ of the sample K1 comprising melt strength enhancing agent consisting of a terpolymer based on vinyl acetate, vinyl versatate and ethylene, occurs at a temperature of 164°C. The cross-over point $T_{k3}$ of the sample K3, containing polybutyrate adipate terephthalate alone, occurs at an even higher temperature of 166,6°C. Of notice is, that the sample K2, containing both polybutyrate adipate terephthalate and a melt strength enhancing agent consisting of a terpolymer based on vinyl acetate, vinyl versatate and ethylene, does not have a cross-over point at all, as also evident from Table 2 (below). In the sample K2, the shear storage modulus $G'_{K2}$ is higher than the shear loss modulus $G''_{K2}$ over the whole measured temperature range from 180°C to 50°C, which overlaps with the processing temperature $T_{sub}$ of the composite melt and the glass transition temperature $T_g$ of the semi-crystalline polylactic acid. This is particularly relevant when viewed together with the melt flow index values as presented in table 1 above, which demonstrate that when the composite material is in a melt state and flowing under shear forces at the extrusion nozzle at a temperature around 180°C, the sample K2 has a melt flow index of 17 g/10 min, which is less than the melt flow index of the sample K3, containing polybutyrate adipate terephthalate, alone. The lower melt flow index of the sample K2 may be used to control the melt flow rate of the composite melt upon fused granulate fabrication at the extrusion nozzle. This also facilitates the fused granulate fabrication at higher temperature, since the self-supporting capability of the melt material is obtainable at a high processing temperature. Thus it may be concluded that the addition of both polybutyrate adipate terephthalate and a melt strength enhancing agent consisting of or comprising a copolymer based on vinyl acetate, vinyl versatate, or a terpolymer based on vinyl acetate, vinyl versatate and ethylene, does not deprive the self-supporting behaviour of the composite melt, since at the processing temperature of the composite material composition, when the material is in a melt state, the shear storage modulus $G'_{K2}$ is already higher than the shear loss modulus $G''_{K2}$, when the shear strain $\gamma$ is small. The composite melt thus already has elastic behaviour above the glass transition temperature of the semi-crystalline polylactic acid, and the deposited material portion is capable to store energy and may return to its initial configuration, when a mechanical force is applied on the material. The addition of both polybutyrate adipate terephthalate and a melt strength enhancing agent consisting of or comprising a copolymer based on vinyl acetate, vinyl versatate, or a terpolymer based on vinyl acetate, vinyl versatate and ethylene may thereby be configured to improve the accuracy of the composite material dispensing.

The results of the temperature sweep experiments that are illustrated in Figures 1 to 7 are presented in Table 2 below.

Table 2. Measured temperature sweep results (50 - 180°C) of composite material samples K1, K2 and K3 in the rheology study, wherein the crossover temperature indicates the composite melt temperature at 0,1 % strain, above which $G'' > G'$.

| Sample | Crossover temp. (°C) |
|--------|---------------------|
| K1 | 164,0 |
| K2 | - |
| K3 | 166,6 |

Values of the amplitude sweep experiments in Figures 1 to 3 are presented in Table 3 below.

Table 3. Measured values from the amplitude sweep experiments of composite material samples K1, K2 and K3. The temperature (°C) indicates the temperature of the composite melt during the amplitude sweep. The shear strain (%) indicates the endpoint values of ranges $CR_{K1}$, $CR_{K2}$, $CR_{K3}$ in the diagrams, wherein the crossover point of the shear storage module G' and the shear loss module G" curves occurred. The G' (kPa) and G" (kPa) values indicates the measured endpoint values for the shear storage module G' and the shear loss module G" of ranges $CR_{K1}$, $CR_{K2}$ and $CR_{K3}$ in the diagrams, in units of kiloPascal.

| Temperature (°C) | Sample | shear strain (%) | G' (kPa) | G" (kPa) |
|---|---|---|---|---|
| 190 | K1 | 4,0 - 6,3 | 8,4 - 6,7 | 7,6 - 6,8 |
| 190 | K2 | 15,8 - 25,1 | 6,1 - 5,0 | 6,1 - 5,4 |
| 190 | K3 | 1,6 - 2,5 | 11,0 - 8,7 | 10,9 - 9,9 |
| 180 | K1 | 2,5 - 4,0 | 10,6 - 8,7 | 10,0 - 9,2 |
| 180 | K2 | 4,0 - 6,3 | 9,8 - 8,2 | 9,3 - 8,5 |
| 180 | K3 | 0,4 - 0,6 | 15,5 - 13,6 | 14,8 - 13,7 |

*Mass spectrometry analysis for detection of the melt strength enhancing agent and polybutyrate adipate terephthalate from the composite material*

The presence of polybutyrate adipate terephthalate and the melt enhancing agent in the composite material may be determined by analytical means, such as by mass spectrometry analysis. Pyrolysis - gas chromatography - mass spectrometry, abbreviated as Py-GC-MS, is an analytical method which may be used to characterize a wide variety of polymers and composite materials. In Py-GC-MS, a known amount of the composite material is introduced to a heated environment, where it is thermally broken down into smaller stable fragments/components, referred to as pyrolyzates. The pyrolyzates are then first separated chromatographically by using a gas chromatography, referred to as GC and then directed to a mass spectrometer, wherein the individual pyrolyzates may be detected. The mass spectrometry data obtained from the individual pyrolyzates may then be compared and matched to mass spectrometry data of known chemical substances, thereby identifying the chemical structure of the pyrolyzate. Thus, Py-GC-MS may be used for confirming the presence of polybutyrate adipate terephthalate and/or the melt enhancing agent which comprises copolymer of vinyl acetate and vinyl versatate in composite material. The advantage of Py-GC-MS method is that the composite material samples can be analyzed without additional sample preparation.

As can be observed from the diagram in Figure 8, a melt strength enhancing agent that is based on vinyl acetate and vinyl versatate can be identified from a composite material using Py-GC-MS, since when broken down thermally, it produces a distinguishable peak. In the sample K1, the distinguishable peak ID11 matched to the presence of methyl ester of 2-ethyl-hexanoic acid, also known as methyl 2-ethylhexanoate. Methyl 2-ethylhexanoate is a decomposition product of a copolymer that contains vinyl acetate and vinyl versatate. The identified decomposition product ID11 was not present in the composite material sample C1.

As can be observed from the diagram in Figure 9, a melt strength enhancing agent that comprises polybutyrate adipate terephthalate can be identified from a composite material using Py-GC-MS, since when broken down thermally, it also produces distinguishable peaks. In the sample K2, the distinguishable peak ID21 matched to the presence of di-(2E)-2-buten-1-yl adipate and the other distinguishable peak ID22 matched to the presence of di-(2E)-2-buten-1-yl terephthalate. The two identified compounds are decomposition products of polybutyrate adipate terephthalate. The identified decomposition products ID21 and ID22 were not present in the composite material sample K1, which did not contain polybutyrate adipate terephthalate.

*Determining the presence of melt strength enhancing agent bv DSC*

The presence of semi-crystalline polylactic acid, polypropylene and the melt enhancing agent in the composite material may be determined by differential scanning calorimetry, also referred to as DSC. DSC is based on measuring of the amount of heat that is required to increase the temperature of a sample as a function of temperature. DSC may thus be used to detect a physical transformation, such as a phase transition, at a given temperature.

Reference is made to Figures 10 to 13, which representing the results of a DSC analysis, wherein an amount in the range of 3 to 9 mg of sample was used in each measurement. Each sample was subjected to a heating cycle from -50°C to 200°C in a nitrogen atmosphere, following the principles of standards ISO 11357-2 and ISO 11357-3 (1999), using a linear rate of 10°C/min. The diagrams show the temperature (°C) plotted on the x-axis and heat flow (W/g) plotted on the y-axis. The instrument used for the DSC analysis was TA Instruments Discovery DSC 250 with autosampler and RCS90 cooler.

Figure 10 represents the DSC results of a reference composite material sample C1 that contained only semi-crystalline polylactic acid, chemical pulp and polypropylene, without polybutyrate adipate terephthalate and melt strength enhancing agent that comprises copolymer based on vinyl acetate and vinyl versatate. The presence of semi-crystalline polylactic acid may be observed as a derivative signal produced at a temperature in the range of 55 to 65°C, which corresponds to the range wherein the melting point $PLA_{MP}$ typically is located. The midpoint of the peak corresponding to the melting point $PLA_{MP}$ was measured to be at 150°C. A still further derivative signal was produced at a temperature in the range of 160 to 168°C, which corresponds to the melting point of the polypropylene. The midpoint of the peak corresponding to the melting point $PP_{MP}$ was measured to be at 163°C.

Figure 11 represents the DSC results of a composite material sample K1 that contained polylactic acid, chemical pulp, polypropylene and melt strength enhancing agent that consisted of a terpolymer based on vinyl acetate, vinyl versatate and ethylene. Hence, the sole difference to the reference sample C1 was the presence of the melt strength enhancing agent. As can be observed from the diagram, the sample K1 produced an additional derivative signal at a temperature in the range of -15°C, corresponding to the glass transition temperature $MEA_{Tg}$ of the melt strength enhancing agent.

Figure 12 represents the DSC results of a composite material sample K2 that contained polylactic acid, chemical pulp, polypropylene, polybutyrate adipate terephthalate and that consisted of a terpolymer based on vinyl acetate, vinyl versatate and ethylene. Hence, the sole difference to the sample K1 was the presence of polybutyrate adipate terephthalate. As can be observed from the diagram, the sample K2 also produced the same derivative signal at a temperature in the range of -15°C, corresponding to the glass transition temperature $MEA_{Tg}$ of the melt strength enhancing agent.

Figure 13 represents the represents the DSC results of a composite material sample K3 that contained polylactic acid, chemical pulp, polypropylene and polybutyrate adipate terephthalate. As evident from the diagram, the glass transition temperature $MEA_{Tg}$ of the melt strength enhancing agent is not present in this sample.

Thus, a composite material having a composition similar to the sample K1 or K2 that comprises

- semi-crystalline polylactic acid in an amount equal to or higher than 25 wt.% of the composite material,
- pulp that contains wood-based cellulose fibres in an amount equal to or higher than 10 wt.% of the composite material,
- polypropylene in an amount equal to or higher than 2 wt.% of the composite material and
- melt strength enhancing agent that comprises

    - copolymer based on vinyl acetate and vinyl versatate or
    - terpolymer based on vinyl acetate, vinyl versatate and ethylene

, when subjected to a differential scanning calorimetry analysis, may produce
- a first derivative signal at a temperature in the range of -14 to -16°C,
- a second derivative signal at a temperature in the range of 55 to 65°C,
- a third derivative signal at a temperature in the range of 145 to 152°C and
- a fourth derivative signal at a temperature in the range of 160 to 168°C,
when the differential scanning calorimetry analysis is performed in a temperature range of -50°C to 200°C under nitrogen atmosphere, at a linear rate of 10°C/min according to ISO 11357-2 and ISO 11357-3 (1999).

The presence and location of the first derivative signal depends of the glass transition temperature of the melt strength enhancing agent. The presence and location of the second derivative signal depends of the glass transition temperature of the semi-crystalline polylactic acid. The presence and location of the third derivative signal depends of the melting point temperature of the semi-crystalline polylactic acid. The presence and location of the fourth derivative signal depends of the melting point temperature of the polypropylene.

## Claims

1. A composite material that is suitable for fused granulate fabrication, the composite material having a composition that comprises

    - semi-crystalline polylactic acid in an amount equal to or higher than 25 wt.% of the composite material,
    - pulp that contains wood-based cellulose fibres in an amount equal to or higher than 10 wt.% of the composite material,
    - polypropylene in an amount equal to or higher than 2 wt.% of the composite material and
    - melt strength enhancing agent that comprises copolymer based on vinyl acetate and vinyl versatate.

2. A method for manufacturing composite material that is suitable fused granulate fabrication, the method comprising

   - mixing

       - pulp that contains wood-based cellulose fibres,
       - semi-crystalline polylactic acid,
       - polypropylene and
       - melt strength enhancing agent that comprises copolymer based on vinyl acetate and vinyl versatate,

   such that a composition is formed,
   - heating the composition to a temperature $T_{sub}$ above the melting point of the composition, thereby producing composite material at a melt state, and
   - decreasing the temperature of the composite material at the melt state below the melting point of the composition, thereby solidifying the composite material,
   wherein

       - the amount of semi-crystalline polylactic acid is equal to or higher than 25 wt.% of the composite material,
       - the amount of pulp that contains wood-based cellulose fibres is equal to or higher than 10 wt.% of the composite material, and
       - the amount of polypropylene is equal to or higher than 2 wt.% of the composite material.

3. The method according to claim 2, further comprising

   - shaping the solidifying composite material or the composite material into a form suitable for fused granulate fabrication, such as into a granular form.

4. The method according to claim 2 or 3, wherein the temperature $T_{sub}$ is below 250°C, preferably in the range of 160 to 250°C, more preferably in the range of 170 to 210°C, most preferably in the range of 180 to 200°C.

5. The composite material according to claim 1 or the method according to any of the claims 2 to 4, wherein the amounts in the composition have been selected such that the composite material at a melt state has a shear loss modulus G" which is less than a shear storage modulus G' at a shear strain $\gamma$ equal to or higher than 1%, when determined using an amplitude sweep at a temperature of 180°C, with parallel plates geometry having a disc diameter of 25 mm and a gap of 0.6 mm in accordance with ISO standard 6721-10:2015, the composite material at a melt state thereby having self-supporting capability that is suitable for fused granulate fabrication.

6. The composite material according to claim 1 or the method according to any of the claims 2 to 4, wherein the polypropylene is

   - a polypropylene homopolymer,
   - a polypropylene that contains coupling agent, such as maleic anhydride, which has been covalently grafted to the polypropylene, or
   - a mixture thereof.

7. The composite material or the method according to any of the previous claims, wherein the pulp that contains wood-based cellulose fibres has a lignin content which is less than 5%, preferably less than 2%, most preferably less than 0.5 wt-% of the weight of the pulp.

8. The composite material or the method according to any of the previous claims, wherein the pulp that contains wood-based cellulose fibres is chemical pulp, chemithermomechanical pulp, thermomechanical pulp or any combination of these, preferably bleached chemical pulp, bleached chemithermomechanical pulp or a combination of these.

9. The composite material according or the method according to any of the previous claims, wherein the composite material has

   - a tensile modulus equal to or higher than 2100 MPa and
   - a tensile strength equal to or higher than 18 MPa, when determined according to ISO standard 527/50 from a printed test specimen type 1B (OBJ1) at a speed of 50 mm/min, at a temperature of 23°C, wherein the printed test specimen type 1B (OBJ1) has been produced by printing each layer of the test specimen type 1B (OBJ1) with an additive manufacturing system in a direction $(S_x)$ parallel to the gauge length $(L_0o)$ of the test specimen type 1B (OBJ1).

10. The composite material or the method according to any of the previous claims, wherein the melt strength enhancing agent consists of

- copolymer based on vinyl acetate and vinyl versatate and/or
- terpolymer based on vinyl acetate, vinyl versatate and ethylene,

said copolymer and/or said terpolymer having a glass transition temperature $T_g$ which is less than 0°C, such as in the range of -5 to -20°C, preferably in the range of -7 to -17°C, most preferably in the range of -10 to -16°C, wherein the glass transition temperature $T_g$ is determined as described in the specification.

11. The composite material or the method according to any of the previous claims, wherein the amount of the melt strength enhancing agent in the composition is

- equal to or higher than 10 wt.%,
- preferably equal to or higher than 15 wt.%,
- most preferably equal to or higher than 20 wt.% of the composite material, such as
- in the range of 1 to 25 wt.%,
- preferably in the range of 10 to 22 wt.%,
- most preferably in the range of 15 to 20 wt.% of the composite material, such that the composite material has
- a shear loss modulus G" which is less than a shear storage modulus G' at a shear strain $\gamma$ that is equal to or higher than 1,5%, preferably equal to higher than 2%, when determined using an amplitude sweep at 180°C, with parallel plates geometry having a disc diameter of 25 mm and a gap of 0.6 mm in accordance with ISO standard 6721-10:2015.

12. The composite material or the method according to any of the previous claims, wherein the composition of the composite material further comprises polybutyrate adipate terephthalate in an amount of

- equal to or less than 12 wt.%,
- preferably equal to or less than 10 wt.%,
- most preferably equal to or less than 5 wt.% of the composite material, such as
- in the range of 1 to 12 wt.%,
- preferably in the range of 2 to 10 wt.%,
- most preferably in the range of 2 to 5 wt.% of the composite material, such that the composite material has
- a shear loss modulus G" less than a shear storage modulus G' at a shear strain $\gamma$ equal to or higher than 2.5%, preferably equal to higher than 3%, most preferably equal to or higher than 4,5%, when determined using an amplitude sweep at 180°C, with parallel plates geometry having a disc diameter of 25 mm and a gap of 0.6 mm in accordance with ISO standard 6721-10:2015.

13. The composite material or the method according to any of the previous claims, wherein the shear loss modulus G" of the composite material is less than the shear storage modulus G' of the composite material at a temperature equal to or higher than 150°C, preferably at a temperature equal to or higher than 160°C, most preferably at a temperature equal to or higher than 165°C, when determined using a temperature sweep having a linear rate of 5°C/min in a temperature range of 50°C to 180°C, with parallel plates geometry having a disc diameter of 25 mm and a gap of 0.6 mm in accordance with ISO standard 6721-10:2015.

14. The composite material or the method according to any of the previous claims, wherein the composite material, when subjected to a differential scanning calorimetry analysis, produces

- a first derivative signal at a temperature in the range of -14 to -16°C,
- a second derivative signal at a temperature in the range of 55 to 65°C,
- a third derivative signal at a temperature in the range of 145 to 152°C and
- a fourth derivative signal at a temperature in the range of 160 to 168°C, when the differential scanning calorimetry analysis is performed in a temperature range of -50°C to 200°C under nitrogen atmosphere, at a linear rate of 10°C/min according to ISO 11357-2 and ISO 11357-3 (1999).

**15.** The composite material or the method according to any of the previous claims, the composite material having a composition that comprises

- semi-crystalline polylactic acid in an amount equal to or higher than 25 wt.% of the composite material,
- pulp that contains wood-based cellulose fibres in an amount equal to or higher than 10 wt.% of the composite material,
- polypropylene in an amount equal to or higher than 10 wt.% of the composite material,
- melt strength enhancing agent that is a terpolymer based on vinyl acetate, vinyl versatate and ethylene, in an amount equal to or higher than 10 wt.% of the composite material, and
- polybutyrate adipate terephthalate in an amount equal to or less than 10 wt.% of the composite material

such that the composite material has

- a shear loss modulus G" which is less than a shear storage modulus G' at a shear strain $\gamma$ which is equal to or higher than 6,5%, when determined using an amplitude sweep at 190°C, with parallel plates geometry having a disc diameter of 25 mm and a gap of 0.6 mm in accordance with ISO standard 6721-10:2015.

**16.** Use of a melt strength enhancing agent which is

- a copolymer based on vinyl acetate and vinyl versatate or
- a terpolymer based on vinyl acetate, vinyl versatate and ethylene,
said copolymer and/or said terpolymer having a glass transition temperature $T_g$ which is less than 0°C, such as in the range of -5 to -20°C, preferably in the range of -7 to -16°C, most preferably in the range of -10 to -15°C, wherein the glass transition temperature Tg is determined as described in the specification, in a composite material that has a composition that comprises
- semi-crystalline polylactic acid in an amount equal to or higher than 25 wt.% of the composite material,
- pulp that contains wood-based cellulose fibres in an amount equal to or higher than 10 wt.% of the composite material, and
- polypropylene in an amount equal to or higher than 2 wt.% of the composite material such that the composite material at a melt state has a shear loss modulus G" which is less than a shear storage modulus G', the composite material thereby having a self-supporting capability at a melt state that is suitable for fused granulate fabrication.

**17.** Use of polybutyrate adipate terephthalate in combination with a melt strength enhancing agent which comprises

- a copolymer based on vinyl acetate and vinyl versatate and/or
- a terpolymer based on vinyl acetate, vinyl versatate and ethylene,

said copolymer and/or said terpolymer having a glass transition temperature $T_g$ which is less than 0°C, such as in the range of -5 to -20°C, preferably in the range of -7 to -16°C, most preferably in the range of -10 to -15°C, wherein the glass transition temperature Tg is determined as described in the specification, in a composite material that contains semi-crystalline polylactic acid, polypropylene and pulp that contains wood-based cellulose fibres.

**Patentansprüche**

**1.** Verbundwerkstoff, der zur Herstellung von Schmelzgranulat geeignet ist, wobei der Verbundwerkstoff eine Zusammensetzung aufweist, die aufweist:

- teilkristalline Polymilchsäure in einer Menge, die gleich oder höher als 25 Gew.-% des Verbundwerkstoffs ist,
- Zellstoff, der Zellulosefasern auf Holzbasis in einer Menge von gleich oder mehr als 10 Gew.-% des Verbundwerkstoffs enthält,
- Polypropylen in einer Menge von gleich oder höher als 2 Gew.-% des Verbundwerkstoffs und
- ein die Schmelzfestigkeit steigerndes Mittel, das ein Copolymer auf der Basis von Vinylacetat und Vinylversatat aufweist.

**2.** Verfahren zur Herstellung eines Verbundwerkstoffs, der zur Herstellung von Schmelzgranulat geeignet ist, wobei das Verfahren aufweist:

- Mischen von

- Zellstoff, der Zellulosefasern auf Holzbasis enthält,
- teilkristalliner Polymilchsäure,
- Polypropylen und
- einem die Schmelzfestigkeit steigerndem Mittel, das ein Copolymer auf der Basis von Vinylacetat und Vinylversatat aufweist,

so dass eine Zusammensetzung gebildet wird,
- Erhitzen der Zusammensetzung auf eine Temperatur $T_{sub}$ oberhalb des Schmelzpunktes der Zusammensetzung, wodurch der Verbundwerkstoff in einem Schmelzzustand erzeugt wird, und
- Absenken der Temperatur des Verbundwerkstoffs im Schmelzzustand unter den Schmelzpunkt der Zusammensetzung, wodurch der Verbundwerkstoff verfestigt wird,
wobei

- die Menge an teilkristalliner Polymilchsäure gleich oder höher als 25 Gew.-% des Verbundwerkstoffs ist,
- die Menge an Zellstoff, der Zellulosefasern auf Holzbasis enthält, gleich oder höher als 10 Gew.-% des Verbundwerkstoffs ist, und
- die Menge an Polypropylen gleich oder größer als 2 Gew.-% des Verbundwerkstoffs ist.

3. Verfahren nach Anspruch 2, ferner umfassend:

- Formen des sich verfestigenden Verbundwerkstoffs oder des Verbundwerkstoffs zu einer für die Herstellung von Schmelzgranulat geeigneten Form, wie z. B. einer Granulatform.

4. Verfahren nach Anspruch 2 oder 3, wobei die Temperatur $T_{sub}$ unter 250° C, vorzugsweise im Bereich von 160 bis 250° C, besonders bevorzugt im Bereich von 170 bis 210° C, am meisten bevorzugt im Bereich von 180 bis 200° C liegt.

5. Verbundwerkstoff nach Anspruch 1 oder Verfahren nach einem der Ansprüche 2 bis 4, wobei die Mengen in der Zusammensetzung so gewählt wurden, dass der Verbundwerkstoff im Schmelzzustand einen Scherverlustmodul G" aufweist, der kleiner als ein Scherspeichermodul G' bei einer Scherdeformation $\gamma$ gleich oder größer als 1 % ist, wenn bestimmt unter Verwendung eines Amplitudensweeps bei einer Temperatur von 180° C mit paralleler Plattengeometrie mit einem Scheibendurchmesser von 25 mm und einem Spalt von 0,6 mm gemäß der ISO-Norm 6721-10:2015, wobei der Verbundwerkstoff im Schmelzzustand eine selbsttragende Fähigkeit aufweist, die für die Herstellung von Schmelzgranulat geeignet ist.

6. Verbundwerkstoff nach Anspruch 1 oder das Verfahren nach einem der Ansprüche 2 bis 4, wobei das Polypropylen

- ein Polypropylen-Homopolymer,
- ein Polypropylen, das ein Kopplungsmittel, wie z. B. Maleinsäureanhydrid, enthält, das kovalent auf das Polypropylen aufgepfropft wurde, oder
- eine Mischung davon ist.

7. Verbundwerkstoff oder Verfahren nach einem der vorhergehenden Ansprüche, wobei der Zellstoff, der Zellulosefasern auf Holzbasis enthält, einen Ligningehalt aufweist, der weniger als 5 %, vorzugsweise weniger als 2 %, am meisten bevorzugt weniger als 0,5 Gew.-% des Gewichts des Zellstoffs beträgt.

8. Verbundwerkstoff oder Verfahren nach einem der vorhergehenden Ansprüche, wobei der Zellstoff, der Zellulosefasern auf Holzbasis enthält, ein chemischer Zellstoff, ein chemithermomechanischer Zellstoff, ein thermomechanischer Zellstoff oder eine beliebige Kombination davon, vorzugsweise ein gebleichter chemischer Zellstoff, ein gebleichter chemithermomechanischer Zellstoff oder eine Kombination davon ist.

9. Verbundwerkstoff oder Verfahren nach einem der vorhergehenden Ansprüche, wobei der Verbundwerkstoff aufweist:

- einen Zugmodul gleich oder höher als 2100 MPa und
- eine Zugfestigkeit gleich oder höher als 18 MPa, wenn bestimmt nach der ISO-Norm 527/50 anhand eines bedruckten Probekörpers Typ 1B (OBJ1) bei einer Geschwindigkeit von 50 mm/min, bei einer Temperatur von 23° C, wobei der gedruckte Probekörpertyp 1B (OBJ1) durch Drucken jeder Schicht des Probekörpertyps 1B (OBJ1) mit einem additiven Fertigungssystem in einer Richtung $(S_x)$ parallel zur Messlänge $(L_0)$ des Probekörpertyps 1B (OBJ1) hergestellt wurde.

10. Verbundwerkstoff oder Verfahren nach einem der vorhergehenden Ansprüche, wobei das die Schmelzfestigkeit steigernde Mittel besteht aus:

   - Copolymer auf der Basis von Vinylacetat und Vinylversatat und/oder
   - Terpolymer auf der Basis von Vinylacetat, Vinylversatat und Ethylen,

   wobei das Copolymer und/oder das Terpolymer eine Glasübergangstemperatur $T_g$ aufweist, die kleiner als 0° C ist, wie beispielsweise im Bereich von -5 bis -20° C, vorzugsweise im Bereich von -7 bis -17° C, am meisten bevorzugt im Bereich von -10 bis -16° C, wobei die Glasübergangstemperatur $T_g$ wie in der Beschreibung beschrieben bestimmt wird.

11. Verbundwerkstoff oder Verfahren nach einem der vorhergehenden Ansprüche, wobei die Menge des die Schmelzfestigkeit steigernden Mittels in der Zusammensetzung ist:

   - gleich oder höher als 10 Gew.-%,
   - vorzugsweise gleich oder höher als 15 Gew.-%,
   - am meisten bevorzugt gleich oder höher als 20 Gew.-% des Verbundwerkstoffs, wie zum Beispiel
   - im Bereich von 1 bis 25 Gew.-%,
   - vorzugsweise im Bereich von 10 bis 22 Gew.-%,
   - am meisten bevorzugt im Bereich von 15 bis 20 Gew.-% des Verbundwerkstoffs,

   so dass der Verbundwerkstoff aufweist:

   - einen Scherverlustmodul G", der kleiner ist als ein Scherspeichermodul G' bei einer Scherdeformation y, die gleich oder größer als 1,5 %, vorzugsweise gleich oder größer als 2 %, ist, wenn bestimmt unter Verwendung eines Amplitudensweeps bei 180° C mit einer parallelen Plattengeometrie mit einem Scheibendurchmesser von 25 mm und einem Spalt von 0,6 mm gemäß der ISO-Norm 6721-10:2015.

12. Verbundwerkstoff oder Verfahren nach einem der vorhergehenden Ansprüche, wobei die Zusammensetzung des Verbundwerkstoffs weiterhin Polybutyrat-Adipat-Terephthalat in folgender Menge aufweist:

   - gleich oder weniger als 12 Gew.-%,
   - vorzugsweise gleich oder weniger als 10 Gew.-%,
   - am meisten bevorzugt gleich oder weniger als 5 Gew.-% des Verbundwerkstoffs, wie zum Beispiel
   - im Bereich von 1 bis 12 Gew.-%,
   - vorzugsweise im Bereich von 2 bis 10 Gew.-%,
   - am meisten bevorzugt im Bereich von 2 bis 5 Gew.-% des Verbundwerkstoffs,

   so dass der Verbundwerkstoff aufweist:

   - einen Scherverlustmodul G", der kleiner als ein Scherspeichermodul G' bei einer Scherdeformation $\gamma$ ist, die gleich oder höher als 2,5 %, vorzugsweise gleich oder höher als 3 %, am meisten bevorzugt gleich oder höher als 4,5 % ist, wenn bestimmt unter Verwendung eines Amplitudensweeps bei 180° C, wobei die parallele Plattengeometrie einen Scheibendurchmesser von 25 mm und einen Spalt von 0,6 mm gemäß der ISO-Norm 6721-10:2015 aufweist.

13. Verbundwerkstoff oder Verfahren nach einem der vorhergehenden Ansprüche, wobei der Scherverlustmodul G" des Verbundwerkstoffs kleiner ist als der Scherspeichermodul G' des Verbundwerkstoffs bei einer Temperatur gleich oder höher als 150° C, vorzugsweise bei einer Temperatur gleich oder höher als 160° C, am meisten bevorzugt bei einer Temperatur gleich oder höher als 165° C, wenn bestimmt unter Verwendung eines Temperatursweeps mit einer linearen Rate von 5 C/min in einem Temperaturbereich von 50 C bis 180° C, wobei die parallele Plattengeometrie einen Scheibendurchmesser von 25 mm und einen Spalt von 0,6 mm in Übereinstimmung mit der ISO-Norm 6721-10:2015 aufweist.

14. Verbundwerkstoff oder Verfahren nach einem der vorhergehenden Ansprüche, wobei der Verbundwerkstoff, wenn er einer Differential-Scanning-Kalorimetrie-Analyse unterzogen wird, Folgendes erzeugt:

- ein erstes Ableitungssignal bei einer Temperatur im Bereich von -14 bis - 16° C,
- ein zweites Ableitungssignal bei einer Temperatur im Bereich von 55 bis 65° C,
- ein drittes Ableitungssignal bei einer Temperatur im Bereich von 145 bis 152° C und
- ein viertes Ableitungssignal bei einer Temperatur im Bereich von 160 bis 168° C,

wenn die Differential-Scanning-Kalorimetrie-Analyse in einem Temperaturbereich von -50° C bis 200° C unter Stickstoffatmosphäre mit einer linearen Rate von 10° C/min gemäß ISO 11357-2 und ISO 11357-3 (1999) durchgeführt wird.

15. Verbundwerkstoff oder Verfahren nach einem der vorhergehenden Ansprüche, wobei der Verbundwerkstoff eine Zusammensetzung aufweist, die aufweist:

- teilkristalline Polymilchsäure in einer Menge, die gleich oder höher als 25 Gew.-% des Verbundwerkstoffs ist,
- Zellstoff, der Zellulosefasern auf Holzbasis in einer Menge von gleich oder höher als 10 Gew.-% des Verbundwerkstoffs enthält,
- Polypropylen in einer Menge von gleich oder höher als 10 Gew.-% des Verbundwerkstoffs,
- ein die Schmelzfestigkeit steigerndes Mittel, das ein Terpolymer auf der Basis von Vinylacetat, Vinylversatat und Ethylen ist, in einer Menge von gleich oder höher als 10 Gew.-% des Verbundwerkstoffs, und
- Polybutyrat-Adipat-Terephthalat in einer Menge von gleich oder weniger als 10 Gew.-% des Verbundwerkstoffs,

so dass der Verbundwerkstoff aufweist:

- einen Scherverlustmodul G", der kleiner als ein Scherspeichermodul G' bei einer Scherdeformation $\gamma$ ist, die gleich oder größer als 6,5 % ist, wenn bestimmt unter Verwendung eines Amplitudensweeps bei 190° C, mit paralleler Plattengeometrie mit einem Scheibendurchmesser von 25 mm und einem Spalt von 0,6 mm gemäß der ISO-Norm 6721-10:2015.

16. Verwendung eines die Schmelzfestigkeit steigernden Mittels, das

- ein Copolymer auf der Basis von Vinylacetat und Vinylversatat oder
- ein Terpolymer auf der Basis von Vinylacetat, Vinylversatat und Ethylen ist,

wobei das Copolymer und/oder das Terpolymer eine Glasübergangstemperatur $T_g$ aufweist, die kleiner als 0° C ist, wie z. B. im Bereich von -5 bis -20° C, vorzugsweise im Bereich von -7 bis -16° C, am meisten bevorzugt im Bereich von -10 bis -15° C, wobei die Glasübergangstemperatur $T_g$ wie in der Beschreibung beschrieben bestimmt wird, in einem Verbundwerkstoff, der eine Zusammensetzung aufweist, die aufweist:

- teilkristalline Polymilchsäure in einer Menge von gleich oder mehr als 25 Gew.-% des Verbundwerkstoffs,
- Zellstoff, der Zellulosefasern auf Holzbasis in einer Menge von gleich oder höher als 10 Gew.-% des Verbundwerkstoffs enthält, und
- Polypropylen in einer Menge von gleich oder höher als 2 Gew.-% des Verbundwerkstoffs,

so dass der Verbundwerkstoff in einem Schmelzzustand einen Scherverlustmodul G" aufweist, der kleiner als ein Scherspeichermodul G' ist, wodurch der Verbundwerkstoff in einem Schmelzzustand eine selbsttragende Fähigkeit aufweist, die für die Herstellung von Schmelzgranulat geeignet ist.

17. Verwendung von Polybutyrat-Adipat-Terephthalat in Kombination mit einem die Schmelzfestigkeit steigernden Mittel, welches aufweist:

- ein Copolymer auf der Basis von Vinylacetat und Vinylversatat und/oder
- ein Terpolymer auf der Basis von Vinylacetat, Vinylversatat und Ethylen,

wobei das Copolymer und/oder das Terpolymer eine Glasübergangstemperatur $T_g$ aufweist, die kleiner als 0° C ist, wie z. B. im Bereich von -5 bis -20° C, vorzugsweise im Bereich von -7 bis -16° C, am meisten bevorzugt im Bereich von -10 bis -15° C, wobei die Glasübergangstemperatur $T_g$ wie in der Beschreibung beschrieben bestimmt wird, in einem Verbundwerkstoff, der teilkristalline Polymilchsäure, Polypropylen und Zellstoff, der Zellulosefasern auf Holzbasis enthält.

**Revendications**

1. Matériau composite qui est approprié pour la fabrication de granulés fusionnés, le matériau composite ayant une composition qui comprend

   - de l'acide polylactique semi-cristallin en une quantité supérieure ou égale à 25% en poids du matériau composite,
   - une pâte qui contient des fibres de cellulose à base de bois en une quantité supérieure ou égale à 10% en poids du matériau composite,
   - du polypropylène en une quantité supérieure ou égale à 2% en poids du matériau composite et
   - un agent améliorant la résistance à l'état fondu qui comprend un copolymère à base d'acétate de vinyle et de versatate de vinyle.

2. Procédé de fabrication d'un matériau composite qui est approprié pour la fabrication de granulés fusionnés, le procédé comprenant

   - mélanger

     - une pâte qui contient des fibres de cellulose à base de bois,
     - de l'acide polylactique semi-cristallin,
     - du polypropylène et
     - un agent améliorant la résistance à l'état fondu qui comprend un copolymère à base d'acétate de vinyle et de versatate de vinyle,

     de sorte qu'une composition soit formée,
   - chauffer la composition à une température $T_{sub}$ supérieure au point de fusion de la composition, produisant ainsi un matériau composite à l'état fondu, et
   - diminuer la température du matériau composite à l'état fondu en dessous du point de fusion de la composition, solidifiant ainsi le matériau composite,
     dans lequel

     - la quantité d'acide polylactique semi-cristallin est supérieure ou égale à 25% en poids du matériau composite,
     - la quantité de pâte qui contient des fibres de cellulose à base de bois est supérieure ou égale à 10% en poids du matériau composite, et
     - la quantité de polypropylène est supérieure ou égale à 2% en poids du matériau composite.

3. Procédé selon la revendication 2, comprenant en outre

   - mettre en forme le matériau composite solidifiant ou le matériau composite sous une forme appropriée pour la fabrication de granulés fusionnés, par exemple sous une forme granulaire.

4. Procédé selon la revendication 2 ou 3, dans lequel la température $T_{sub}$ est inférieure à 250°C, de préférence dans la plage allant de 160 à 250°C, plus préférablement dans la plage allant de 170 à 210°C, idéalement dans la plage allant de 180 à 200°C.

5. Matériau composite selon la revendication 1 ou procédé selon l'une des revendications 2 à 4, dans lequel les quantités dans la composition ont été choisies de sorte que le matériau composite à l'état fondu ait un module de perte en cisaillement G" qui est inférieur à un module de conservation en cisaillement G' à une déformation de cisaillement y supérieure ou égale à 1%, lorsque cela est déterminé en utilisant un balayage d'amplitude à une température de 180°C, avec une géométrie de plaques parallèles ayant un diamètre de disque de 25 mm et un espace de 0,6 mm conformément à la norme ISO 6721-10:2015, le matériau composite à l'état fondu ayant ainsi une capacité autoportante qui est appropriée pour la fabrication de granulés fusionnés.

6. Matériau composite selon la revendication 1 ou procédé selon l'une des revendications 2 à 4, dans lequel le polypropylène est

- un homopolymère de polypropylène,
- un polypropylène qui contient un agent de couplage, tel que l'anhydride maléique, qui a été greffé de manière covalente sur le polypropylène, ou
- un mélange de ceux-ci.

7. Matériau composite ou procédé selon l'une des revendications précédentes, dans lequel la pâte qui contient des fibres de cellulose à base de bois a une teneur en lignine qui est inférieure à 5%, de préférence inférieure à 2%, idéalement inférieure à 0,5% en poids du poids de la pâte.

8. Matériau composite ou procédé selon l'une des revendications précédentes, dans lequel la pâte qui contient des fibres de cellulose à base de bois est une pâte chimique, une pâte chimithermomécanique, une pâte thermomécanique ou de toute combinaison de celles-ci, de préférence une pâte chimique blanchie, une pâte chimiothermomécanique blanchie ou une combinaison de celles-ci.

9. Matériau composite ou procédé selon l'une des revendications précédentes, dans lequel le matériau composite a

- un module de traction supérieur ou égal à 2100 MPa et
- une résistance à la traction supérieure ou égale à 18 MPa, lorsqu'elle est déterminée selon la norme ISO 527/50 à partir d'une éprouvette imprimée de type 1B (OBJ1) à une vitesse de 50 mm/min, à une température de 23°C, dans laquelle l'éprouvette imprimée de type 1B (OBJ1) a été produite en imprimant chaque couche de l'éprouvette de type 1 B (OBJ1) avec un système de fabrication additive dans une direction $(S_x)$ parallèle à la longueur de référence $(L_0)$ de l'éprouvette de type 1 B (OBJ1).

10. Matériau composite ou procédé selon l'une des revendications précédentes, dans lequel l'agent améliorant la résistance à l'état fondu est constitué

- d'un copolymère à base d'acétate de vinyle et de versatate de vinyle et/ou
- d'un terpolymère à base d'acétate de vinyle, de versatate de vinyle et d'éthylène,

ledit copolymère et/ou ledit terpolymère ayant une température de transition vitreuse $T_g$ qui est inférieure à 0°C, par exemple dans la plage allant de -5 à -20°C, de préférence dans la plage allant de -7 à -17°C, idéalement dans la plage allant de -10 à -16°C, dans lequel la température de transition vitreuse $T_g$ est déterminée comme décrit dans la spécification.

11. Matériau composite ou procédé selon l'une des revendications précédentes, dans lequel la quantité de l'agent améliorant la résistance à l'état fondu dans la composition est

- supérieure ou égale à 10% en poids,
- de préférence supérieure ou égale à 15% en poids,
- idéalement supérieure ou égale à 20% en poids du matériau composite, par exemple
- dans la plage allant de 1 à 25% en poids,
- de préférence dans la plage allant de 10 à 22% en poids,
- idéalement dans la plage allant de 15 à 20% en poids du matériau composite,

de sorte que le matériau composite ait

- un module de perte en cisaillement G" qui est inférieur à un module de conservation en cisaillement G' à une déformation de cisaillement y qui est supérieure ou égale à 1,5%, de préférence supérieure ou égale à 2%, lorsque cela est déterminé en utilisant un balayage d'amplitude à 180°C, avec une géométrie de plaques parallèles ayant un diamètre de disque de 25 mm et un espace de 0,6 mm conformément à la norme ISO 6721-10:2015.

12. Matériau composite ou procédé selon l'une des revendications précédentes, dans lequel la composition du matériau composite comprend en outre du polybutyrate adipate téréphtalate en une quantité qui est

- inférieure ou égale à 12% en poids,

- de préférence inférieure ou égale à 10% en poids,
- idéalement inférieure ou égale à 5% en poids du matériau composite, par exemple
- dans la plage allant de 1 à 12% en poids,
- de préférence dans la plage allant de 2 à 10% en poids,
- idéalement dans la plage allant de 2 à 5% en poids du matériau composite,

de sorte que le matériau composite ait

- un module de perte en cisaillement G" inférieur à un module de conservation en cisaillement G' à une déformation de cisaillement γ supérieure ou égale à 2,5%, de préférence supérieure ou égale à 3%, idéalement supérieure ou égale à 4,5%, lorsque cela est déterminé en utilisant un balayage d'amplitude à 180°C, avec une géométrie de plaques parallèles ayant un diamètre de disque de 25 mm et un espace de 0,6 mm conformément à la norme ISO 6721-10:2015.

13. Matériau composite ou procédé selon l'une des revendications précédentes, dans lequel le module de perte en cisaillement G" du matériau composite est inférieur au module de conservation en cisaillement G' du matériau composite à une température supérieure ou égale à 150°C, de préférence à une température supérieure ou égale à 160°C, idéalement à une température supérieure ou égale à 165°C, lorsque cela est déterminé en utilisant un balayage de température ayant une vitesse linéaire de 5°C/min dans une plage de température allant de 50°C à 180°C, avec une géométrie de plaques parallèles ayant un diamètre de disque de 25 mm et un espace de 0,6 mm conformément à la norme ISO 6721-10:2015.

14. Matériau composite ou procédé selon l'une des revendications précédentes, dans lequel le matériau composite, lorsqu'il est soumis à une analyse calorimétrique différentielle à balayage, produit

- un premier signal dérivé à une température dans la plage allant de -14 à -16°C,
- un deuxième signal dérivé à une température dans la plage allant de 55 à 65°C,
- un troisième signal dérivé à une température dans la plage allant de 145 à 152°C et
- un quatrième signal dérivé à une température dans la plage allant de 160 à 168°C,

lorsque l'analyse calorimétrique différentielle à balayage est effectuée dans une plage de température allant de -50°C à 200°C sous atmosphère d'azote, à une vitesse linéaire de 10°C/min selon les normes ISO 11357-2 et ISO 11357-3 (1999).

15. Matériau composite ou procédé selon l'une des revendications précédentes, le matériau composite ayant une composition qui comprend

- de l'acide polylactique semi-cristallin en une quantité supérieure ou égale à 25% en poids du matériau composite,
- une pâte qui contient des fibres de cellulose à base de bois en une quantité supérieure ou égale à 10% en poids du matériau composite,
- du polypropylène en une quantité supérieure ou égale à 10% en poids du matériau composite,
- un agent améliorant la résistance à l'état fondu qui est un terpolymère à base d'acétate de vinyle, de versatate de vinyle et d'éthylène, en une quantité supérieure ou égale à 10% en poids du matériau composite, et
- du polybutyrate adipate téréphtalate en une quantité inférieure ou égale à 10% en poids du matériau composite

de sorte que le matériau composite ait

- un module de perte en cisaillement G" qui est inférieur à un module de conservation en cisaillement G' à une déformation de cisaillement γ supérieure ou égale à 6,5%, lorsque cela est déterminé en utilisant un balayage d'amplitude à 190°C, avec une géométrie de plaques parallèles ayant un diamètre de disque de 25 mm et un espace de 0,6 mm conformément à la norme ISO 6721-10:2015.

16. Utilisation d'un agent améliorant la résistance à l'état fondu qui est

- un copolymère à base d'acétate de vinyle et de versatate de vinyle ou
- un terpolymère à base d'acétate de vinyle, de versatate de vinyle et d'éthylène,

ledit copolymère et/ou ledit terpolymère ayant une température de transition vitreuse $T_g$ qui est inférieure à 0°C, par exemple dans la plage allant de -5 à -20°C, de préférence dans la plage allant de -7 à -16°C, idéalement dans la plage allant de -10 à -15°C, dans laquelle la température de transition vitreuse Tg est déterminée comme décrit dans la spécification,
dans un matériau composite qui a une composition qui comprend

- de l'acide polylactique semi-cristallin en une quantité supérieure ou égale à 25% en poids du matériau composite,
- une pâte qui contient des fibres de cellulose à base de bois en une quantité supérieure ou égale à 10% en poids du matériau composite, et
- du polypropylène en une quantité supérieure ou égale à 2% en poids du matériau composite

de sorte que le matériau composite à l'état fondu ait un module de perte en cisaillement G" qui est inférieur à un module de conservation en cisaillement G', le matériau composite ayant ainsi une capacité autoportante à un état fondu qui est appropriée pour la fabrication de granulés fusionnés.

17. Utilisation de polybutyrate adipate téréphtalate en combinaison avec un agent améliorant la résistance à l'état fondu qui comprend

- un copolymère à base d'acétate de vinyle et de versatate de vinyle et/ou
- un terpolymère à base d'acétate de vinyle, de versatate de vinyle et d'éthylène,

ledit copolymère et/ou ledit terpolymère ayant une température de transition vitreuse $T_g$ qui est inférieure à 0°C, par exemple dans la plage allant de -5 à -20°C, de préférence dans la plage allant de -7 à -16°C, idéalement dans la plage allant de -10 à -15°C, dans laquelle la température de transition vitreuse Tg est déterminée comme décrit dans la spécification,
dans un matériau composite qui contient de l'acide polylactique semi-cristallin, du polypropylène et une pâte qui contient des fibres de cellulose à base de bois.

modulus (Pa)

## Fig. 1

modulus (Pa)

## Fig. 2

modulus (Pa)

Fig. 3

modulus (Pa)

Fig. 4

Fig. 5

Fig. 6

Fig. 7

Fig. 8

Abundance

Fig. 9

Fig. 10

Fig. 11

Fig. 12

Fig. 13

Fig. 14

**REFERENCES CITED IN THE DESCRIPTION**

**Patent documents cited in the description**

- EP 3257661 A1